# EUROPEAN PATENT APPLICATION

(11) **EP 4 382 196 A2**
(43) Date of publication of application: **12.06.2024**
(21) Application number: 24170773.6
(22) Date of filing: 23.09.2020
(51) Int. Cl.: B01D 65/08

(54) **SELF CLEANING DEVICE AND METHOD FOR CONTINUOUS FILTRATION OF HIGH VISCOSITY FLUIDS**

(30) Priority: 25.09.2019 US 201962905469 P
(62) Divisional of application: 20868765.7
(71) Applicant: Pinto, Gideon, 4427809 Kefar Sava (IL)
(72) Inventor: Pinto, Gideon, 4427809 Kefar Sava (IL)
(74) Representative: Pearl Cohen Zedek Latzer Baratz UK LLP

(57) **Abstract**

A method of continuous filtration of contaminants from a contaminated viscous fluid, the method comprising: pumping the contaminated viscous fluid between a non-perforated surface and a perforated surface disposed substantially parallel to each other at a defined gap, thereby forcing movement of the contaminated viscous fluid in a longitudinal direction along the gap; moving the non-perforated surface and the perforated surface with respect to each other at a defined relative speed, thereby forcing movement of the contaminated viscous fluid in a direction substantially parallel to the relative speed with a smooth, vortex-free laminar flow with Reynolds Number (Re) < 1, thereby generating a shear rate in the contaminated viscous fluid near the perforated surface in the direction substantially parallel to the relative speed; wherein the perforated surface is shaped as a first cylindrical body having a first central longitudinal axis and the non-perforated surface is shaped as a second cylindrical body having a second central longitudinal axis coinciding with the first longitudinal axis and the first and second cylindrical bodies overlap and wherein the relative speed is a rotational speed and the gap is an annular gap; providing pressure to the contaminated viscous fluid, thereby forcing movement of the contaminated viscous fluid in a direction substantially perpendicular to the direction of the relative speed; and regulating the relative speed, the pressure and an average shear rate at the gap so that a layer of the contaminated viscous fluid adjacent to the perforated surface is forced to flow through perforation apertures of the perforated surface to other side of the perforated surface, while contaminants having a size larger than the a size of the perforation apertures are forced to flow in the direction substantially parallel to the relative speed, wherein the relative speed is directed tangentially to surfaces of the first and second cylinders and perpendicularly to the second central longitudinal axis of the second cylindrical body and the first central longitudinal axis of the first cylindrical body.

## Description

### FIELD OF THE INVENTION

The present invention relates to the field of devices for continuous filtration of contaminants from a viscous fluid, and more particularly, to self-cleaning devices thereof.

### BACKGROUND OF THE INVENTION

Current devices for filtration of contaminants from a viscous fluid, such as melt polymeric materials with contaminants, typically include filtering element with a plurality of apertures. The apertures are typically adapted to enable a passage of the viscous fluid and to prevent a passage of the contaminants therethrough. During the filtration process the contaminants may be accumulated on the face of the filtering element and block the apertures thereof.

Some current devices include metal blades adapted to scrape the filtering element to thereby clean the accumulated contaminants from the apertures. However, this scraping of the filtering element by metal blades may damage the filtering element and as a result the blades and/or the filtering element require frequent replacement thereof. Some other current devices apply a backflow of the filtered viscous fluid to thereby remove the contaminants blocking the apertures and clean the filtering element. However, this leads to wasting of already filtrated viscous fluid and/or requires interruption of the filtration process.

There is thus a long felt need in a self-cleaning device for continuous filtration of viscous fluids.

### SUMMARY OF THE INVENTION

One aspect of the present invention may provide a method of continuous filtration of contaminants from a contaminated viscous fluid, the method may include: pumping the contaminated viscous fluid between a non-perforated surface and a perforated surface disposed substantially parallel to each other at a defined first gap, thereby forcing movement of the contaminated viscous fluid in a longitudinal direction along the gap, moving the non-perforated surface and the perforated surface with respect to each other at a defined relative speed, thereby forcing movement of the contaminated viscous fluid in a direction substantially parallel to the relative speed thereby generating a shear rate in the contaminated viscous fluid near the perforated surface in the direction substantially parallel to the relative speed, wherein the perforated surface is shaped as a first cylindrical body having a first central longitudinal axis and the non-perforated surface is shaped as a second cylindrical body having a second central longitudinal axis coinciding with the first longitudinal axis and the first and second cylindrical bodies overlap and wherein the relative speed is a rotational speed and the first gap is an annular gap, and wherein the second cylindrical body includes one or more longitudinal fins protruding from second cylindrical body into the first gap towards the perforated surface of the first cylindrical body thereby forming a second gap between the distal tips of the fins and the perforated surface, the second gap is smaller than the first gap. The method may also include regulating the relative speed, the pressure and an average shear rate at the second gap so that a layer of the contaminated viscous fluid adjacent to the perforated surface is forced to flow through perforation apertures of the perforated surface to other side of the perforated surface, while contaminants having a size larger than the a size of the perforation apertures are forced to flow in the direction substantially parallel to the relative speed, wherein the relative speed is directed tangentially to surfaces of the first and second cylinders and perpendicularly to the second central longitudinal axis of the second cylindrical body and the first central longitudinal axis of the first cylindrical body.

In some embodiments, the method may further include setting the relative speed, the pressure and the average shear rate within the gap so that an average velocity of the contaminated viscous fluid in the direction substantially parallel to the relative speed is at least 50 times higher than an average velocity of the contaminated viscous towards perforated surface while maintaining the flow of the viscous fluid adjacent the perforated surface substantially laminar and so that the average shear rate within the gap is at least 50 1/sec.

In some embodiments, the perforation apertures are slots each having a long dimension and a short dimension and wherein the long dimensions of the slots are substantially aligned substantially perpendicular to the relative speed and parallel to the longitudinal axis of the first cylindrical body.

In some embodiments, the rotational speed of the second cylindrical body may be increased for a first period of time at a given rotational speed acceleration and then be deaccelerated to a nominal rotational speed at a lower rate, thereby to momentary increase the sweeping effect of contaminants off perforated surface.

In some embodiments, the method may comprise removing contaminant particles accumulating on the perforated surface by increasing the pressure of fluid of filtered viscous fluid at the other side of the perforated surface preferably to a level substantially same as the pressure of the contaminated fluid at the side with the contaminated viscous fluid during the actual filtering of the contaminated viscous fluid and while shear rate at the second gap is maintained by providing pressurized jets of fluid of filtered viscous fluid towards the side with the contaminated viscous fluid during the actual filtering of the contaminated viscous fluid.

In some embodiments, the wherein the perforated surface comprises a plurality of grooves, wherein a depth of the grooves is smaller than the short dimension of the slots and wherein at least one of the grooves lays across at least one of the slots.

In some embodiments, the perforation apertures are disposed along at least one longitudinal filtering section along a circumference and length of the first cylindrical body.

In some embodiments, the first cylindrical body is disposed within the second cylindrical body.

In some embodiments, the second cylindrical body is disposed within the first cylindrical body.

In some embodiments, the annular gap tapers along the common rotational axis by at least one of the first cylindrical body tapers along the first longitudinal central axis and the second cylindrical body tapers along the second longitudinal central axis such that the annular gap diminishes along the first longitudinal central.

in some embodiments, one of the first cylindrical body or the second cylindrical body comprises at least one section of helically flighted fins disposed along the respective longitudinal central axis and downstream the at least one longitudinal filtering section, the helically flighted fins protrude into the annular gap.

Another aspect of the present invention may provide a device for continuous filtration of contaminants from a viscous fluid, the device comprising a first cylindrical body having a first longitudinal central axis and comprising at least one longitudinal filtering section, the at least one longitudinal filtering section comprises a plurality of apertures along a circumference thereof and a second cylindrical body having a second longitudinal central axis that coincides with the first longitudinal axis of the first cylindrical body, wherein the first cylindrical body is adapted to overlap and to rotate with respect to the second cylindrical body such that an annular gap is formed between the first cylindrical body and the second cylindrical body, wherein the annular gap is adapted to receive the viscous fluid, and wherein the second cylindrical body includes one or more longitudinal fins protruding from second cylindrical body into the annular gap towards the perforated surface of the first cylindrical body thereby forming a second gap between the distal tips of the fins and the perforated surface, the second gap is smaller than the annular gap.

In some embodiments the device further comprises a rotating assembly comprising at least a rotational motor, the rotational motor is coupled to one of the first cylindrical body and the second cylindrical body and adapted to rotate one of the first cylindrical body and the second cylindrical body, respectively, at a controlled rotational speed and a controller in communication with the rotating assembly, the controller is configured to control a relative rotation between the first cylindrical body and the second cylindrical body by the rotating assembly according to the controlled rotational speed.

In some embodiments, the first cylindrical body is disposed within the second cylindrical body.

In some embodiments, the second cylindrical body is disposed within the first cylindrical body.

In some embodiments, the apertures are slots each having a long dimension and a short dimension and wherein the long dimensions of the slots are substantially aligned with the first longitudinal central axis of the first cylindrical body.

In some embodiments, the device further comprises one or more jets disposed on the other side of the perforated surface adapted to provide pressurized jest of fluid of filtered viscous fluid from the other side of the perforated surface towards the side with the contaminated viscous fluid during actual filtering of the contaminated viscous fluid.

In some embodiments, the first cylindrical body further comprises a plurality of grooves along the circumference thereof, wherein a depth of the grooves is smaller than the short dimension of the slots.

In some embodiments, at least one of the grooves lays across at least one of the slots.

In some embodiments, the at least one longitudinal filtering section is disposed at a predetermined distance downstream a first end of the first cylindrical body.

the annular gap tapers along the common rotational axis by at least one of the first cylindrical body tapers along the first longitudinal central axis and the second cylindrical body tapers along the second longitudinal central axis such that the gap diminishes along the first longitudinal central.

In some embodiments, the first cylindrical body comprises at least one section of helically flighted fins disposed along the first longitudinal central axis, the helically flighted fins protrude into the annular gap.

In some embodiments, the device further comprises a washing assembly, the washing assembly comprising at least one washing injector comprising a plurality of injection holes/slots and a washing tube in fluid communication with the at least one washing injector and adapted to deliver a clean viscous fluid to the at least one washing injector, wherein the at least one washing injector is disposed and dimensioned so as to extend along at least a portion of the at least one longitudinal filtering section of the first cylindrical body and adapted to inject the clean viscous fluid towards the rotating first cylindrical body from the clean viscous side of the rotating first cylindrical body through its apertures towards the other side of the rotating first cylindrical body.

Another aspect of the present invention may provide a device for continuous filtration of contaminants from a viscous fluid, the device comprising a first cylindrical body having a first longitudinal central axis and comprising at least one longitudinal filtering section, the at least one longitudinal filtering section comprises a plurality of apertures along a circumference thereof, a second cylindrical body having a second longitudinal central axis that coincides with the first longitudinal axis of the first cylindrical body, wherein the first cylindrical body is adapted to overlap and to rotate with respect to the second cylindrical body such that an annular gap is formed between the first cylindrical body and the second cylindrical body, wherein the annular gap is adapted to receive the viscous fluid, at least one set of longitudinal fins disposed on the second cylindrical body at a position that corresponds to a position of the at least one longitudinal filtering section on the first cylindrical body, wherein the at least one set of longitudinal fins comprises at least one longitudinal fin protruding from the second cylindrical body into the annular gap and towards the first cylindrical body, the at least one longitudinal fin is aligned with the second longitudinal central axis and extends along at least a portion of a length of the at least one longitudinal filtering section and at least one section of helically flighted fins disposed along the first longitudinal central axis of the first cylindrical body and protruding into the annular gap.

Another aspect of the present invention may provide a device for continuous filtration of contaminants from a viscous fluid, the device comprising a first cylindrical body having a first longitudinal central axis and comprising at least one longitudinal filtering section, the at least one longitudinal filtering section comprises a plurality of apertures along a circumference thereof and a second cylindrical body having a second longitudinal central axis that coincides with the first longitudinal axis of the first cylindrical body, wherein the second cylindrical body is adapted to overlap and to rotate with respect to the first cylindrical body such that an annular gap is formed between the first cylindrical body and the second cylindrical body, wherein the annular gap is adapted to receive the viscous fluid.

In some embodiments, the device further comprises a rotating assembly comprising at least a rotational motor, the rotational motor is coupled to the second cylindrical body and adapted to rotate the second cylindrical body at a predetermined rotational speed and a controller in communication with the rotating assembly, the controller is configured to control the rotation of the second cylindrical body by the rotating assembly according to the predetermined rotational speed.

In some embodiments, the first cylindrical body is disposed within the second cylindrical body.

In some embodiments, the second cylindrical body is disposed within the first cylindrical body.

In some embodiments, the apertures are slots each having a long dimension and a short dimension.

In some embodiments, the slots are substantially aligned along the long dimensions thereof with the first longitudinal central axis of the first cylindrical body.

In some embodiments, the first cylindrical body further comprises a plurality of grooves along the circumference thereof, wherein a depth of the grooves is smaller than the short dimension of the slots.

In some embodiments, at least one of the grooves lays across at least one of the slots.

In some embodiments, the at least one longitudinal filtering section is disposed at a predetermined distance downstream a first end of the first cylindrical body.

In some embodiments, the first cylindrical body tapers along the first longitudinal central axis such that the gap diminishes along the first longitudinal central.

In some embodiments, the second cylindrical body tapers along the second longitudinal central such that the gap diminishes along the second longitudinal central.

In some embodiments, the second cylindrical body comprises at least one longitudinal fin protruding from the second cylindrical body into the annular gap and towards the first cylindrical body, the at least one longitudinal fin is aligned with the second longitudinal central axis and extends along at least a portion of a length of the at least one longitudinal filtering section.

In some embodiments, the second cylindrical body comprises at least one section of helically flighted fins disposed along the first longitudinal central axis.

Another aspect of the present invention may provide device for continuous filtration of contaminants from a viscous fluid, the device comprising a first cylindrical body having a first longitudinal central axis and comprising at least one longitudinal filtering section, the at least one longitudinal filtering section comprises a plurality of apertures along a circumference thereof, a second cylindrical body having a second longitudinal central axis that coincides with the first longitudinal axis of the first cylindrical body, wherein the second cylindrical body is adapted to overlap and to rotate with respect to the first cylindrical body such that an annular gap is formed between the first cylindrical body and the second cylindrical body, wherein the annular gap is adapted to receive the viscous fluid, at least one set of longitudinal fins disposed on the second cylindrical body at a position that corresponds to a position of the at least one longitudinal filtering section on the first cylindrical body, wherein the at least one set of longitudinal fins comprises at least one longitudinal fin protruding from the second cylindrical body into the annular gap and towards the first cylindrical body, the at least one longitudinal fin is aligned with the second longitudinal central axis and extends along at least a portion of a length of the at least one longitudinal filtering section and at least one section of helically flighted fins disposed along the second longitudinal central axis of the second cylindrical body and protruding into the annular gap.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

For a better understanding of embodiments of the invention and to show how the same can be carried into effect, reference will now be made, purely by way of example, to the accompanying drawings in which like numerals designate corresponding elements or sections throughout.

In the accompanying drawings:
**Figs. 1A, 1B****,** **1C, 1D** and **1E** are schematic illustrations of a device for continuous filtration of contaminants from a viscous fluid, according to some embodiments of the invention;
**Figs. 1F** and **1G** are schematic illustrations of a more detailed aspect to a device for continuous filtration of contaminants from a viscous fluid and further illustrating an operation process of the device, according to some embodiments of the invention;
**Fig. 1H** is a schematic partial illustration of relative velocity components of the viscous fluid with respect to an aperture on a first cylindrical body of a device for continuous filtration of contaminants from a viscous fluid, according to embodiments of the present invention;
**Figs. 2A****,** **2B** and **2C** are schematic illustrations of a device for continuous filtration of contaminants from a viscous fluid and including a first cylindrical body with a plurality of slots, according to some embodiments of the invention;
**Fig. 2D** is a schematic illustration of a device for continuous filtration of contaminants from a viscous fluid and including a first cylindrical body with a plurality of grooves, according to some embodiments of the invention;
**Figs. 3A** and **3B** are schematic illustrations of various configuration of a device for continuous filtration of contaminants from a viscous fluid and including at least one tapered cylindrical body, according to some embodiments of the invention;
**Figs. 4A, 4B****,** **4C** and **4D** are schematic illustrations of a device for continuous filtration of contaminants from a viscous fluid and including one or more longitudinal fins, according to some embodiments of the invention;
**Fig. 5** is a schematic illustration of a device for continuous filtration of contaminants from a viscous fluid and including one or more sections of helically flighted fins, according to some embodiments of the invention;
**Figs. 6A** and **6B** are schematic illustrations of a device for continuous filtration of contaminants from a viscous fluid and including one or more sets of longitudinal fins and one or more sections of helically flighted fins, according to some embodiments of the invention;
**Figs. 7A** and **7B** are schematic illustrations of a device for continuous filtration of contaminants from a viscous fluid and including a washing assembly, according to some embodiments of the invention;
**Figs. 8A** and **8B** are schematic illustrations of a device for continuous filtration of contaminants from a viscous fluid including a stationary filtering element, according to some embodiments of the invention;
**Figs. 8C** and **8D** are schematic illustrations of a device for continuous filtration of contaminants from a viscous fluid including a stationary filtering element and further including one or more longitudinal fins, according to some embodiments of the invention;
**Fig. 8E** is a schematic illustration of a device for continuous filtration of contaminants from a viscous fluid including a stationary filtering element and further including one or more sections of helically flighted fins, according to some embodiments of the invention;
**Figs. 8F** and **8G** are schematic illustrations of a device for continuous filtration of contaminants from a viscous fluid including a stationary filtering element and further including one or more sets of longitudinal fins and one or more sections of helically flighted fins, according to some embodiments of the invention;
**Figs. 8H****,** is an enlarged view of the cross section of Fig. 8G, emphasizing the nature of the flow of the contaminated viscous fluid in the gap formed between fins and a perforated surface, according to embodiments of the invention; and
**Fig. 9** is a schematic illustration of a method of continuous filtration of contaminants from a viscous fluid.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or

### DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention can be practiced without the specific details presented herein. Furthermore, well known features can have been omitted or simplified in order not to obscure the present invention. With specific reference to the drawings, it is stressed that the particulars shown are by way of example and for purposes of illustrative discussion of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention can be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that can be practiced or carried out in various ways as well as to combinations of the disclosed embodiments. Also, it is to be understood that the phraseology and terminology employed herein is for the purpose of description and should not be regarded as limiting.

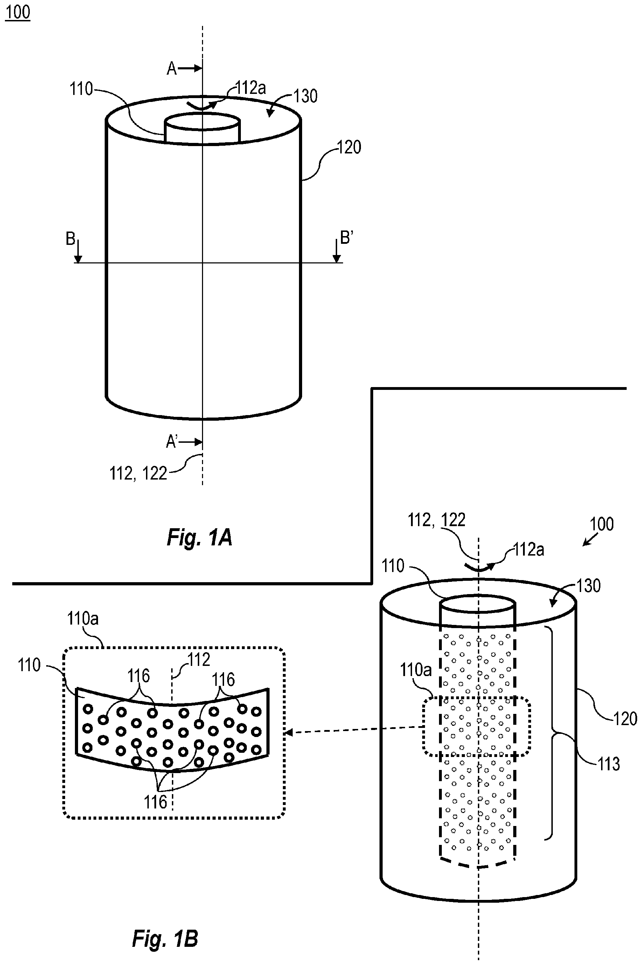

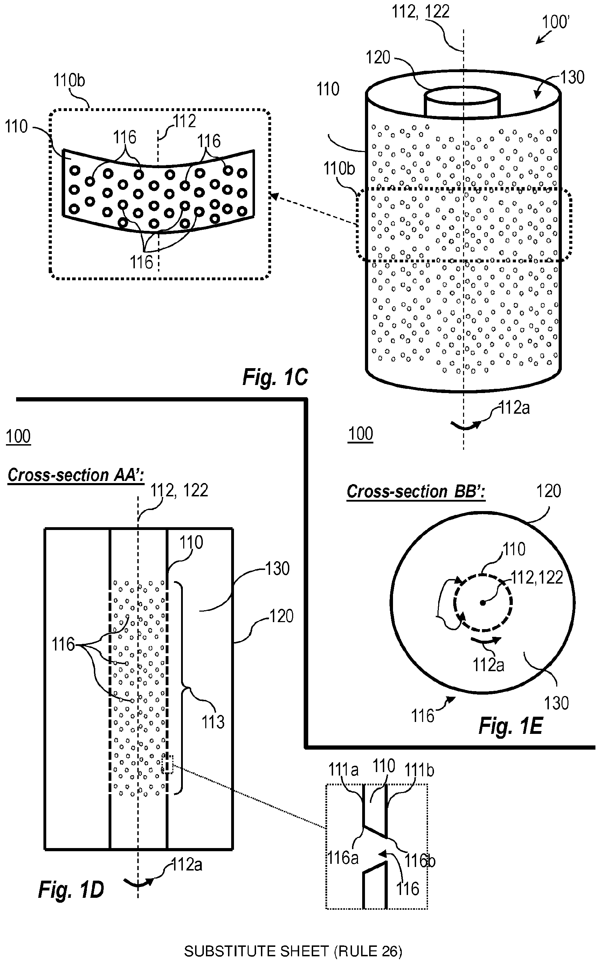

Reference is now made to Figs. 1A, 1B, 1C, 1D and 1E, which are schematic illustrations of a device 100 for continuous filtration of contaminants from a viscous fluid, according to some embodiments of the invention.

Figs. 1A and 1C show a perspective view of device 100 and device 100', respectively. Fig. 1B shows a perspective view of device 100 in which a portion of a first cylindrical body 110 that is hidden by second cylindrical body 120 is depicted by dashed lines. Figs. 1D and 1E show a longitudinal cross-section AA' and a transverse cross-section BB' of device 100, respectively, wherein cross-section AA' and cross-section BB' are defined in Fig. 1A.

Device 100 may include a first cylindrical body 110 having a first longitudinal central axis 112 and a second cylindrical body 120 having a second longitudinal central axis 122. First cylindrical body 110 and second cylindrical body 120 may overlap such that first longitudinal central axis 112 coincides with second longitudinal central axis 122 and an annular gap 130 is formed between first cylindrical body 110 and second cylindrical body 120 (e.g., as shown in Figs. 1A, 1B, 1C, 1D and 1E).

In various embodiments, first cylindrical body 110 may be disposed within second cylindrical body 120 (e.g., as shown in Fig. 1A, 1B, 1D and 1E) or second cylindrical body 120 may be disposed within first cylindrical body 110 (e.g., as shown in Fig. 1C).

Annular gap 130 between first cylindrical body 110 and second cylindrical body 120 may be adapted to receive a viscous fluid. For example, the viscous fluid may be a melt of polymeric materials. The melt of polymeric materials may, for example, include a plurality of contaminants. For example, the contaminants may include hard solid particles of minerals, metals, fibers, etc. In another example, the contaminants may include soft semi-solid particles of elastomers, a foreign polymer of a higher melting point than the viscous fluid, etc.

First cylindrical body 110 may be rotatably supported and adapted to rotate about first longitudinal central axis 112 and with respect to second cylindrical body 120 (e.g., as indicated by arrow 112a in Figs. 1A, 1B, 1C, 1D and 1E).

First cylindrical body 110 may include a plurality of apertures 116 disposed along at least a portion of a circumference of first cylindrical body 110. Apertures 116 may be disposed along at least one longitudinal filtering section 113 (e.g., in a direction along first longitudinal central axis 112) of first cylindrical body 110. For example, Figs. 1B and 1C show enlarged portions 110a, 1 10b, respectively, of the circumference of first cylindrical body 110 with apertures 116.

In various embodiments, shape and/or dimensions of apertures 116 and/or distances between the apertures 116 and/or the topology of location of apertures 116 on first cylindrical body 110 may be predetermined to enable a required flow of the viscous fluid while preventing a passage of contaminants therethrough. In some embodiments, apertures 116 may have round shape.

In some embodiments, apertures 116 may be tapered in a radial direction such that openings 116a of apertures 116 on an inner surface 111a of first cylindrical body 110 may be larger than openings 116b of apertures 116 on an outer surface 111b of first cylindrical body 110.

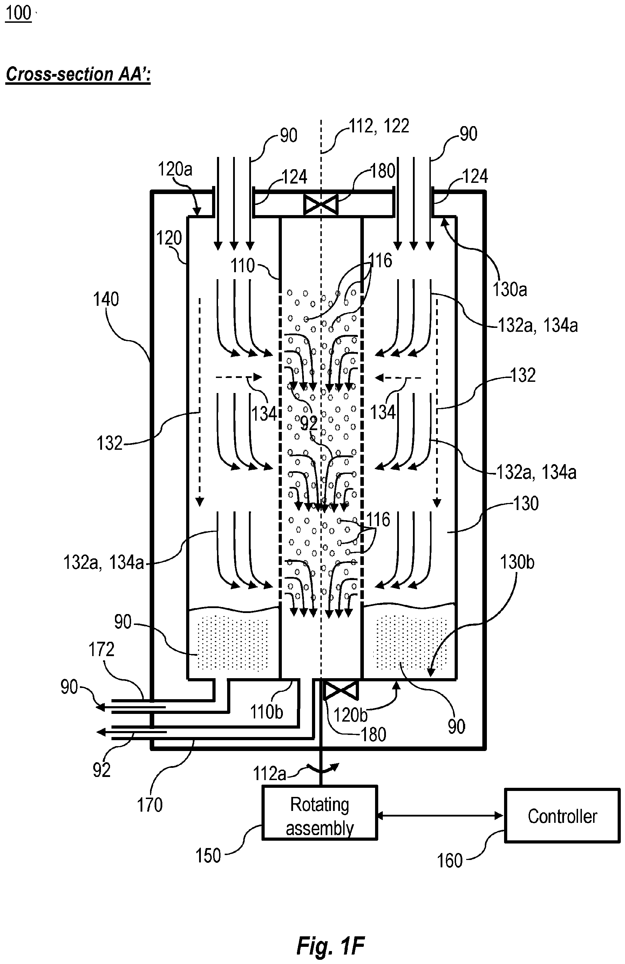

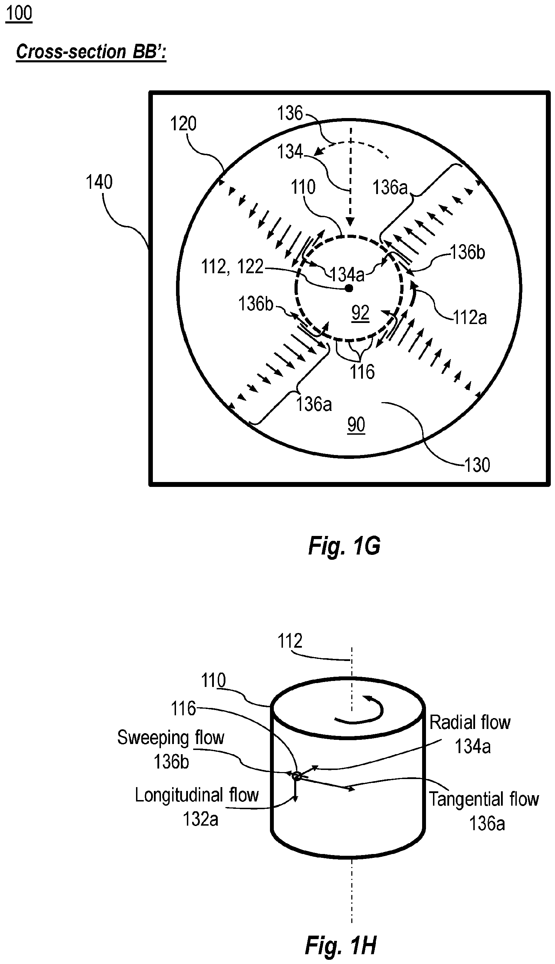

Reference is now made to **Figs. 1F** and **1G**, which are schematic illustrations of a more detailed aspect to a device 100 for continuous filtration of contaminants from a viscous fluid and further illustrating an operation process of device 100, according to some embodiments of the invention.

Figs. 1F and 1G show longitudinal cross-section AA' and transverse cross-section BB' of device 100, respectively, wherein cross-section AA' and cross-section BB' are defined in Fig. 1A.

Reference is also made to **Fig. 1H**, which is a schematic partial illustration of relative velocity components of the viscous fluid with respect to an aperture 116 on a first cylindrical body 110 of a device 100 for continuous filtration of contaminants from a viscous fluid, according to embodiments of the present invention.

According to some embodiments, device 100 may include a housing 140, a rotating assembly 150 and a controller 160.

Housing 140 may be adapted to accommodate first cylindrical body 110 and second cylindrical body 120 that may be adapted to be mounted within housing 140. Rotating assembly 150 may include at least a rotational motor coupled to first cylindrical body 110 and adapted to rotate first cylindrical body 110. Controller 160 may be in communication with rotating assembly 150 and may be configured to control the rotation of first cylindrical body 110 by rotating assembly 150.

According to some embodiments, a viscous fluid with contaminants 90 (e.g., a melt of polymeric materials with contaminants) may be introduced into annular gap 130 between first cylindrical body 110 and second cylindrical body 120. For example, second cylindrical body 120 may include one or more inlet openings 124 at a first end 120a thereof, wherein inlet opening(s) 124 may be in fluid communication with annular gap 130 and may be adapted to enable introduction of viscous fluid with contaminants 90 into annular gap 130 (e.g., as shown in Fig. 1F).

Continuous introduction of viscous fluid with contaminants 90 into annular gap 130 may drive viscous fluid with contaminants 90 along annular gap 130 in a longitudinal direction 132 extending between a first end 130a and a second end 130b of annular gap 130, thereby generating a longitudinal flow 132a of the viscous fluid.

A pressure generated within annular gap 130 (e.g., at least due to continuous introduction of viscous fluid with contaminants 90 therein in a desired flow rate and introducing pressure) may drive viscous fluid with contaminants 90 to flow in a radial direction 134 towards the perforated surface while maintaining substantially laminar tangential flow of the viscous contaminated fluid adjacent the perforated surface, thereby generating a radial flow 134a of the viscous fluid (e.g., in addition to longitudinal flow 132a thereof). The pressure within annular gap 130 may thus force the viscous fluid to pass through apertures 116 on the circumference of first cylindrical body 110. Apertures 116 may prevent the contaminants from passing therethrough, thereby filtrating the contaminants from the viscous fluid and keeping the contaminants within annular gap 130. A clean viscous fluid 92 (e.g., without the contaminants, or substantially without the contaminants) may be controllably removed from, for example, a second end 110b of first cylindrical body 110 using clean viscous fluid removing means 170.

First cylindrical body 110 may be continuously rotated about its first longitudinal central axis 112 by rotating assembly 150, thereby generating a laminar tangential drag flow 136a of the viscous fluid within annular gap 130 in a tangential direction 136 thereof (e.g., in addition to the longitudinal flow and radial flow thereof). A tangential velocity gradient is generated between the rotating first cylindrical body 110 and the stationary second cylindrical body 120. Contaminant particles in layers away from the surface of the rotating first cylindrical body 110 drag at slower tangential velocities than the surface of the rotating first cylindrical body 110, thus generating a self-sweeping tangential relative motion 136b about the surface of rotating first cylindrical body 110 where the contaminant particles move tangentially around (e.g., in tangential direction 136) and longitudinally down towards exit 120b (e.g., in longitudinal direction 132) as well as a motion towards the surface of first cylindrical body 110 (e.g., in radial direction 134). Contaminant particles of a larger size than apertures 116 on the surface of first cylindrical body 110 may continue their rotational movement even upon touching the surface of rotating first cylindrical body 110 as long as the rotational speed of first cylindrical body 110 is maintained and/or a desired shear rate near the surface of first cylindrical body 110 is maintained (e.g., as described below). It will be noted that according to embodiments of the invention the flow of the viscous fluid along the radial direction is maintained towards and through the perforated surface while the remaining fluid that does not pass through the perforated surface maintains a tangential flow that is substantially a laminar flow, as described, for example, by arrows 136a in Figs. 1G and 1H.

Typical viscosities of plastics melt range from a minimum of 0.1 Pa•sec at shear rate of 100 1/sec at melt processing temperatures, and a few orders of magnitude higher (up to 10,000 Pa•sec). It is known in the art that at such high viscosities, viscous forces are dominant while inertial (gravimetry or centrifugal) forces are relatively negligible. The ratio of inertial forces to viscous forces is known as Reynolds Number (Re) where flow at low Re is characterized with a flow regime of smooth layer-like laminar flow, while at Re of over about 2900 the flow contains turbulences. In the field of polymer melt processing, due to high viscosities, the flow is smooth, vortex-free laminar flow. In embodiments of the present invention the range of Reynolds number is kept Re<1, i.e. well within stable laminar flow range.

Contaminant particles of a larger size than apertures 116 on the surface of first cylindrical body 110 may continue their rotational movement even upon touching the surface of rotating first cylindrical body 110 as long as the rotational speed of first cylindrical body 110 is maintained and/or a desired shear rate near the surface of first cylindrical body 110 is maintained (e.g., as described below).

The rotational speed of first cylindrical body 110 and consequent tangential drag flow 136a and/or self-sweeping tangential relative motion 136b may be determined to dramatically minimize the attachment of the contaminants to first cylindrical body 110 and dramatically minimize blocking of apertures 116 by the contaminants (e.g., at least due to self-sweeping tangential relative motion 136b), thus generating a self-cleaning/sweeping effect. In some embodiments, self-sweeping tangential relative motion 136b may be generated along the entire filtering section 113 of first cylindrical body 110 with apertures 116. In this manner, self-cleaning/sweeping of the first cylindrical body 110 is simultaneously applied on the entire filtering section 113.

The self-cleaning/sweeping effect may be generated due to a shear rate of the viscous fluid near the surface of first cylindrical body 110, wherein the shear rate may be dictated, in some embodiments, at least by the rotational speed of first cylindrical body 110 and dimensions of annular gap 130. For example, an average shear rate of at least 50 1/sec, for example 100-500 1/sec in annular gap 130 may provide the self-cleaning/sweeping effect.

In general, the rotational speed of first cylindrical body 110 may be controlled to ensure that a tangential velocity of the viscous fluid near the surface of first cylindrical body 110 (e.g., due to of tangential drag flow 136a) is significantly higher than an average radial velocity of the viscous fluid (e.g., due to radial flow 134a). In some embodiments, the rotational speed may be controlled to provide a ratio of a maximal tangential velocity over the average radial velocity of at least 50, for example at least 100-3000.

Viscous fluid with contaminants 90 flowing within annular gap 130 (e.g., due to continuous introduction of the viscous fluid with contaminants 90 into annular gap 130) may flow towards the exit of the device within annular gap 130 at its second end 130b. The controlled removal of viscous fluid with contaminants 90 at second end 130b of annular gap 130 may contribute to the generation of the pressure within annular gap 130 and thus may contribute to the radial flow (e.g., in direction 134) of the viscous fluid through apertures 116 and the filtration thereof from. Viscous fluid with contaminants 90 accumulated within annular gap 130 at its second end 130b may be controllably removed (e.g., preferably continuously, or periodically or at predetermined time points) from annular gap 130 using a non-filtrated viscous fluid removing means 172 coupled to, for example, a second end 120b of second cylindrical body 120.

According to some embodiments, device 100 may include a cooling unit 180 (e.g., as shown in Fig. 1F). Cooling unit 180 may be adapted to cool device 100.

According to some embodiments, the disclosed device (e.g., such as device 100 described above with respect to Figs. 1A, 1B, 1C, 1D, 1E, 1F, 1G and 1H) may enable continuous filtration of viscous fluid (e.g., highly viscous fluids such as melt of polymeric materials) while performing continuous self-cleaning of the device. The self-cleaning of the device may be achieved by rotation of the filtering element thereof (e.g., first cylindrical body 110) at a controlled rotational speed to generate a tangential drag flow of the viscous fluid (e.g., tangential drag flow 136a) within an annular gap containing the viscous fluid between the filtering element and a stationary element (e.g., annular gap 130 between first cylindrical body 110 and second cylindrical body 120) and/or a self-sweeping tangential relative motion of the viscous fluid within the annular gap immediately adjacent to the filtering element (e.g., self-sweeping tangential relative motion 136b). The rotational speed of filtering element, and the size of the annular gap may be determined so as to ensure that a velocity of the tangential drag flow (e.g., generated due to rotation of the filtering element) is at least 50 (e.g., at least 100-3000) folds higher than an average velocity of a radial flow of the viscous fluid within the annular gap (e.g., generated due to a pressure within the annular gap) and the average shear rate in the annular gap is at least 50 1/sec. In this manner, the consequent tangential drag flow and/or the self-sweeping tangential relative motion generated adjacent to the filtering element may dramatically minimize the attachment of the contaminants to filtering element and dramatically minimize blocking of apertures (e.g., apertures 116) of the filtering element, thus generating a self-cleaning/sweeping effect of the filtering element/device. The disclosed device may thus eliminate, or dramatically reduce, a need for cleaning procedures of the filtering element (e.g., due to the self-cleaning/sweeping thereof) and thereby may overcome the disadvantages of current filtration devices that typically apply metal blades onto the filtering element or apply a backflow of the filtrated viscous fluid to the filtering element while the cleaned filter is not in filtering mode.

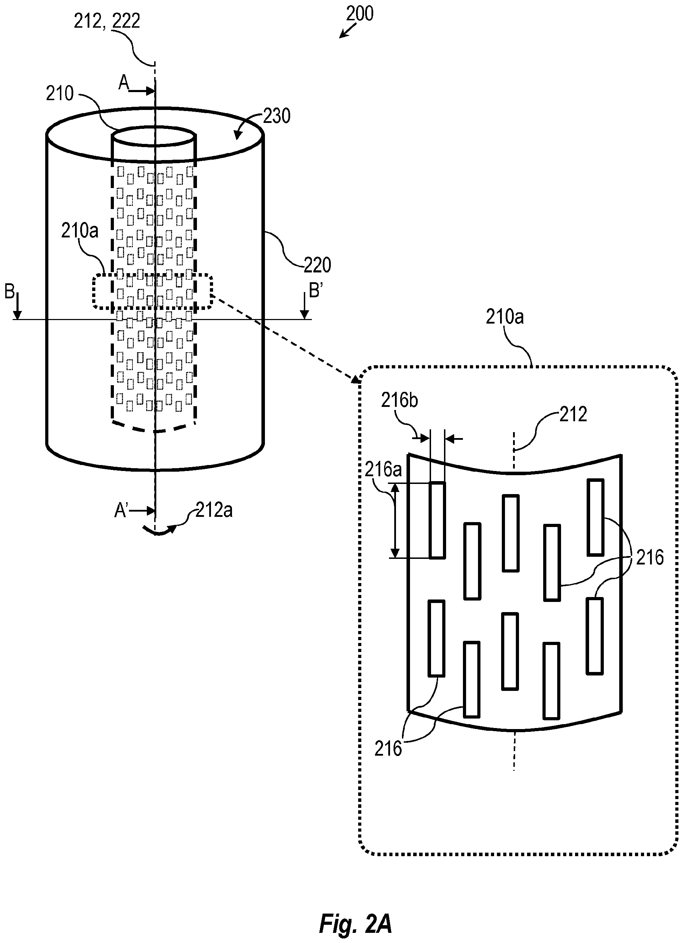

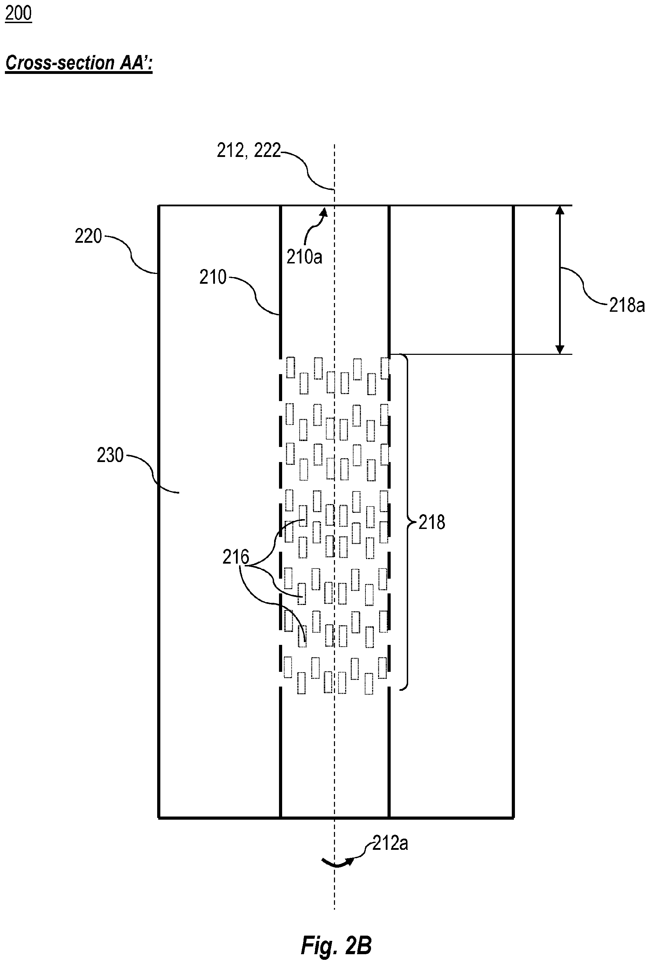

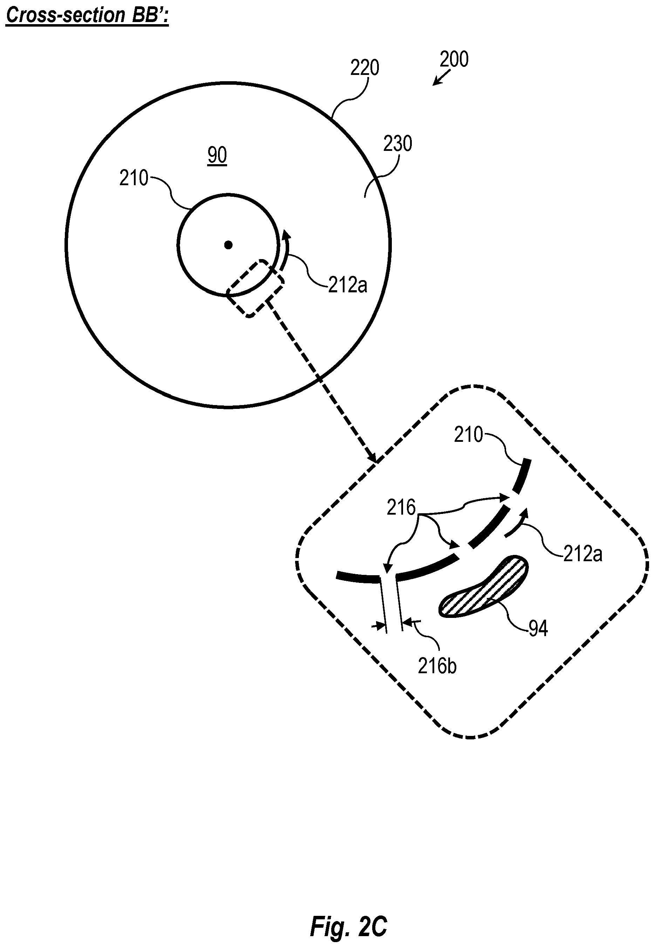

Reference is now made to **Figs. 2A**, **2B** and **2C**, which are schematic illustrations of a device 200 for continuous filtration of contaminants from a viscous fluid and including a first cylindrical body 210 with a plurality of slots 216, according to some embodiments of the invention.

Fig. 2A shows a perspective view of device 200. Figs. 2B and 2C show a longitudinal cross-section AA' and a transverse cross-section BB' of device 200, respectively, wherein cross-section AA' and cross-section BB' are defined in Fig. 2A.

According to some embodiments, device 200 may include a first cylindrical body 210 having a first longitudinal central axis 212 and a second cylindrical body 220 having a second longitudinal central axis 222. First cylindrical body 210 and second cylindrical body 220 may overlap such that first longitudinal central axis 212 coincides with second longitudinal central axis 222 and an annular gap 230 is formed between first cylindrical body 210 and second cylindrical body 220.

First cylindrical body 210 may be rotatably supported and adapted to rotate about first longitudinal central axis 212 and with respect to second cylindrical body 220 (e.g., as indicated by arrow 212a in Figs. 2A, 2B and 2C). For example, device 200, first cylindrical body 210 and second cylindrical body 220 may be similar to device 100, first cylindrical body 110 and second cylindrical body 120, respectively, described above with respect to Figs. 1A, 1B, 1C, 1D, 1E, 1F, 1G and 1H.

According to some embodiments, first cylindrical body 210 may include a plurality of slots 216 along a circumference of first cylindrical body 210. Slots 216 may be similar to apertures 116 described above with respect to Figs. 1A, 1B, 1C, 1D, 1E, 1F, 1G and 1H. Slots 216 may be disposed along at least one longitudinal filtering section 218 (e.g., in a direction along first longitudinal central axis 122) of first cylindrical body 210 (e.g., as shown in Fig. 2B). Each of slots 216 may have a long dimension 216a and a short dimension 216b (e.g., as shown in Fig. 2A). In some embodiments, slots 216 may be aligned (or substantially aligned) along their long dimensions 216a with first longitudinal central axis 212 of first cylindrical body 210 (e.g., as shown in Fig. 2A).

Annular gap 230 may be adapted to receive viscous fluid with contaminants 90. At least some of the contaminants may have an elongated shape (e.g., elongated contaminants 94 shown in Fig. 2C). First cylindrical body 210 may be continuously rotated about its first longitudinal central axis 212 at a controlled rotational speed. The rotational speed of first cylindrical body 210 may be controlled to provide a tangential velocity of a tangential drag flow of the viscous fluid near the surface of first cylindrical body 210 (e.g., due to the rotation of first cylindrical body 210) that is at least 3 folds higher than an average longitudinal velocity of a longitudinal flow of the viscous fluid (e.g., in a longitudinal direction 232 along annular gap 232). For example, the tangential drag flow and the longitudinal flow may be similar to tangential drag flow 136a and longitudinal flow 132a, respectively, as described above with respect to Figs. 1F, 1G and 1H. At least the rotational speed of first cylindrical body 210 and dimensions of annular gap 230 may, in some embodiments, yield a high shear rate of the viscous fluid near the surface of first cylindrical body 210 (e.g., the average shear rate in annular gap 130 of at least 50 1/sec, for example 100-500 1/sec).

Such dominating tangential drag flow and/or such high shear rates near the surface of first cylindrical body 210 may align elongated contaminants 94 substantially along a tangential direction within annular gap 230 and substantially perpendicular to first longitudinal central axis 212 of first cylindrical body 210 and to slots 216 (e.g., as shown in Fig. 2C). In this manner, the passage of elongated contaminants (and/or the passage of soft elastomeric contaminants stretched/elongated due to high shear rates generated by rotation of first cylindrical body 110) through slots 216 may be dramatically minimized, which may enhance the self-cleaning of device 200. Furthermore, such dominating tangential drag flow may provide a longer path of the contaminated viscous fluid within annular gap 230 and thus yield more effective depletion of clean viscous fluid from the contaminated viscous fluid.

In some embodiments, longitudinal filtering section 218 including slots 216 may be disposed at a predetermined distance 218a downstream a first end 210a of first cylindrical body 210 at which viscous fluid 90 is being introduced into annular gap 230 (e.g., as shown in Fig. 2B). Distance 218a may be predetermined based on parameters of viscous fluid 90 (e.g., viscosity) and the rotational speed of first cylindrical body 210 to provide a sufficient distance for elongated contaminants 94 to align with the tangential drag flow before reaching longitudinal filtering section 218.

In some embodiments, slots 216 may be aligned (or substantially aligned) along their long dimensions 216a with an actual velocity vector of viscous fluid flow. The velocity vector may be determined based on the maximal tangential velocity of the tangential drag flow, the maximal longitudinal velocity of the longitudinal flow and the maximal radial velocity of the radial flow of the viscous fluid.

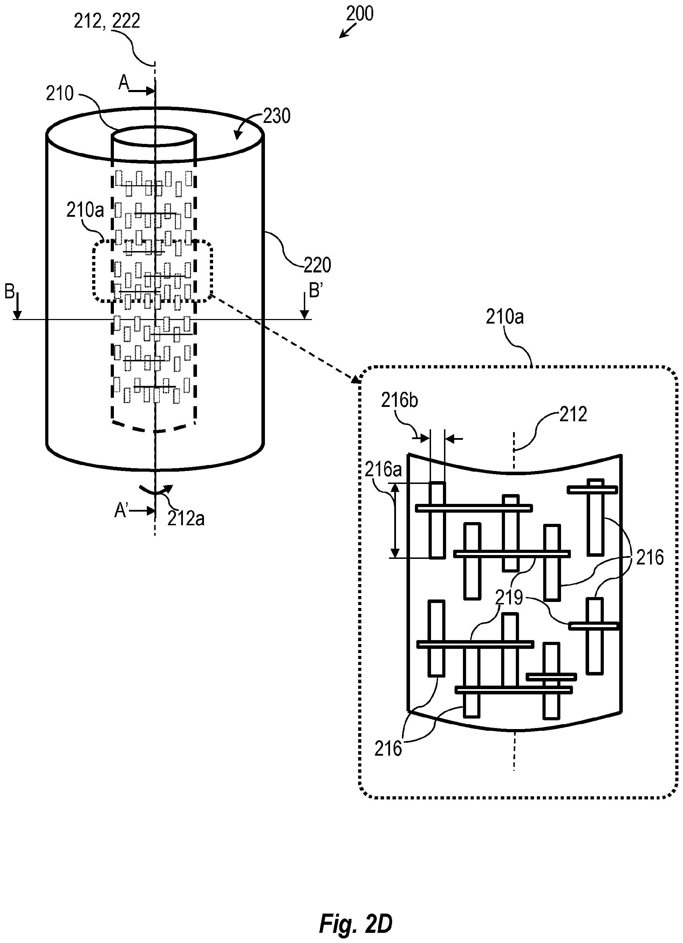

Reference is now made to **Fig. 2D**, which is a schematic illustration of a device 200 for continuous filtration of contaminants from a viscous fluid and including a first cylindrical body 210 with a plurality of grooves 219, according to some embodiments of the invention.

Fig. 2D shows a perspective view of device 200 and an enlarged portion 210a of the circumference of first cylindrical body 210 with slots 216 and grooves 219.

According to some embodiments, first cylindrical body 210 may include a plurality of grooves 219. Grooves 219 may be disposed on a surface of first cylindrical body 210 that faces annular gap 230. In some embodiments, a depth of grooves 219 may be smaller than short dimensions 126b of slots 216. In some embodiments, grooves 219 may be perpendicular (or substantially perpendicular) to slots 216. In some embodiments, at least one of grooves 219 may lay across at least one of slots 216.

In general, number, shape, location and/or amount of indentation of groves 219 may be predetermined to provide a desired measure of roughness to the surface of first cylindrical body 210. The desired measure of roughness may be selected to further minimize the attachment of the contaminants to first cylindrical body 210 and minimize the blocking of slots 216 by the contaminants, which may enhance the self-cleaning of device 200.

It is noted that grooves may be applied to the surface of the first cylindrical body having any shape of apertures rather than slots 216. For example, first annual body 110 of device 100 (e.g., as described above with respect to Figs. 1A, 1B, 1C, 1D, 1E, 1F, 1G and 1H) may also include grooves that may be similar grooves 219.

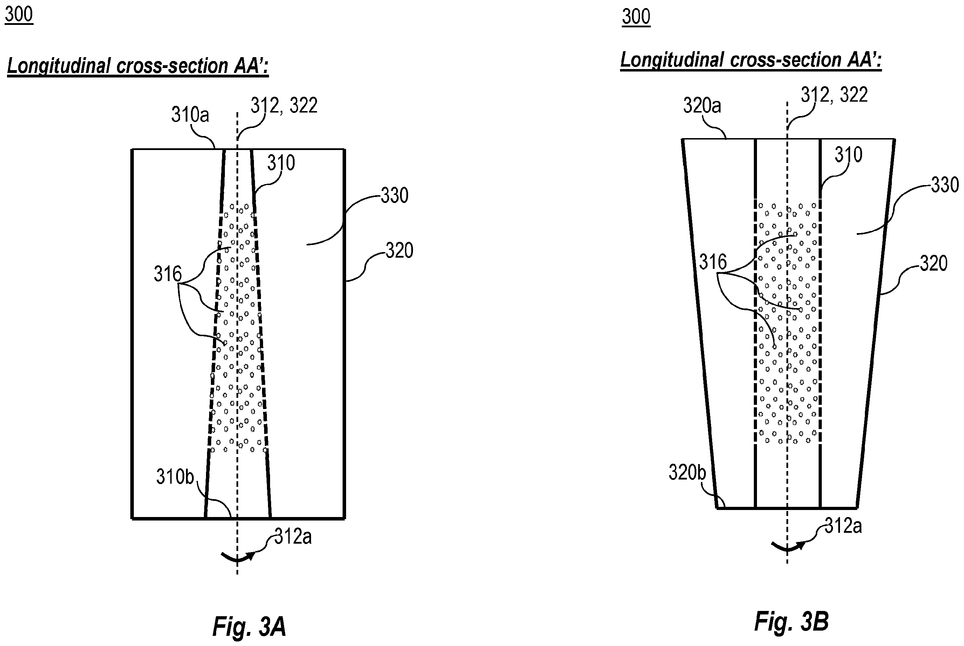

Reference is now made to **Figs. 3A** and **3B****,** which are schematic illustrations of various configuration of a device 300 for continuous filtration of contaminants from a viscous fluid and including at least one tapered cylindrical body, according to some embodiments of the invention.

Figs. 3A and 3B show a longitudinal cross-section AA' of device 300 (e.g., similar to longitudinal cross-section AA' defined in Fig. 1A).

According to some embodiments, device 300 may include a first cylindrical body 310 having a first longitudinal central axis 312 and a second cylindrical body 320 having a second longitudinal central axis 322. First cylindrical body 310 and second cylindrical body 320 may overlap such that first longitudinal central axis 312 coincides with second longitudinal central axis 322 and an annular gap 330 is formed between first cylindrical body 310 and second cylindrical body 320. For example, device 300, first cylindrical body 310, second cylindrical body 320 and annular gap 330 may be similar to device 100, first cylindrical body 110 and second cylindrical body 120, respectively, described above with respect to Figs. 1A, 1B, 1C, 1D, 1E, 1F, 1G and 1H.

First cylindrical body 310 may include a plurality of apertures 316. For example, apertures 316 may be similar to apertures 116 and/or slots 216 described above with respect to Figs. 1A, 1B, 1C, 1D, 1E, 1F, 1G and 1H and Figs. 2A, 2B, 2C and 2D, respectively.

First cylindrical body 310 may be rotatably supported and adapted to rotate about first longitudinal central axis 312 and with respect to second cylindrical body 320 (e.g., as indicated by arrow 312a in Figs. 3A and 3B). Annular gap 330 between first cylindrical body 310 and second cylindrical body 320 may be adapted to receive a viscous fluid (e.g., a melt of polymeric materials with contaminants).

In some embodiments, first cylindrical body 310 may taper along its first longitudinal central axis 312. For example, dimensions of first cylindrical body 310 at its first end 310a may be smaller than its dimensions at its second end 310b such that gap 330 diminishes along first longitudinal central axis 312 (e.g., as shown in Fig. 3A).

In some embodiments, second cylindrical body 320 may taper along its second longitudinal central axis 322. For example, dimensions of second cylindrical body 320 at its first end 320a may be smaller than its dimensions at its second end 320b such that gap 330 diminishes along second longitudinal central axis 322 (e.g., as shown in Fig. 3B).

In some embodiments, both first cylindrical body 310 and second annual body 320 may taper along their respective longitudinal central axes such that gap 330 diminishes along the respective longitudinal central axes thereof.

In general, the measure of tapering of first cylindrical body 310 and/or of second cylindrical body 320 may be predetermined to provide tapered annular gap 330. The tapering of annular gap 330 may be determined to compensate for a pressure loss of viscous fluid 90 within annular gap 330 due to outflow of the viscous fluid through apertures 316 on first cylindrical body 310.

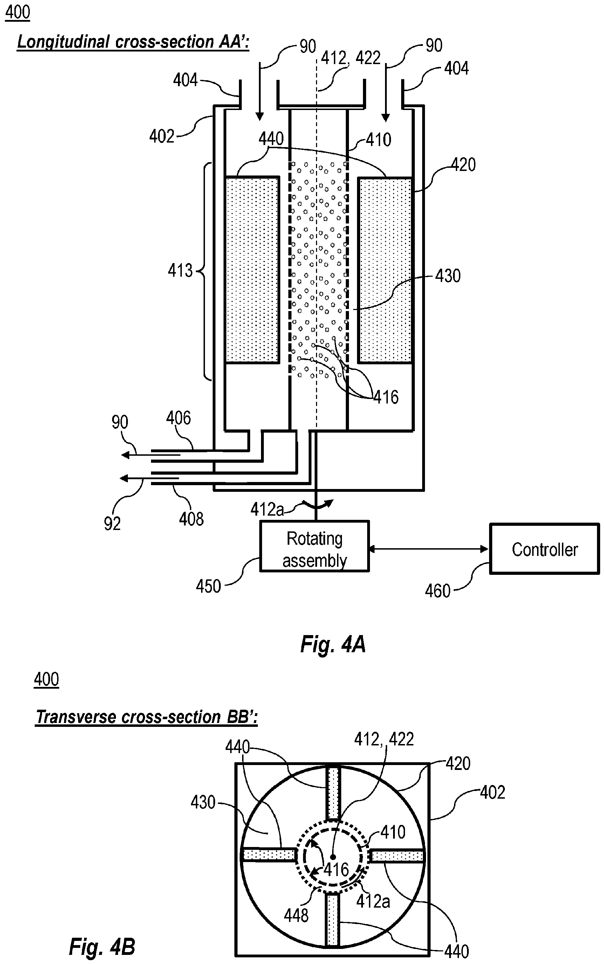

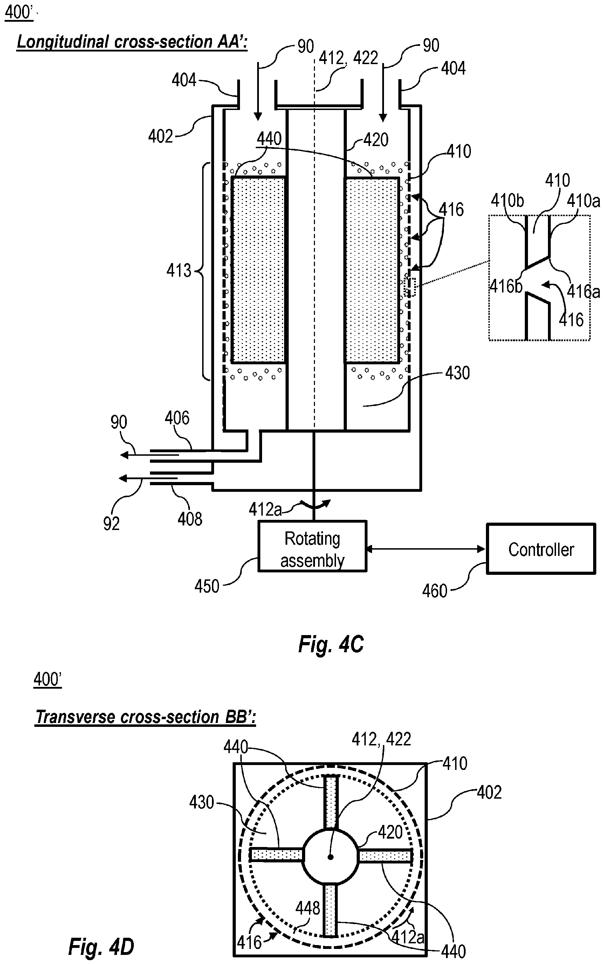

Reference is now made to **Figs. 4A**, **4B** and **Figs. 4C** and **4D**, which are schematic illustrations of a device 400 and device 400', respectively, for continuous filtration of contaminants from a viscous fluid and including one or more longitudinal fins 440, according to some embodiments of the invention.

Fig. 4A and Fig. 4B show a longitudinal cross-section AA' and a transverse cross-section BB' of device 400, respectively (e.g., similar to longitudinal cross-section AA' and transverse cross-section BB' defined in Fig. 1A). Fig. 4C and Fig. 4D show a longitudinal cross-section AA' and a transverse cross-section BB' of device 400', respectively (e.g., similar to longitudinal cross-section AA' and transverse cross-section BB' defined in Fig. 1A).

According to some embodiments, device 400 may include a first cylindrical body 410 having a first longitudinal central axis 412 and a second cylindrical body 420 having a second longitudinal central axis 422. First cylindrical body 410 and second cylindrical body 420 may overlap such that first longitudinal central axis coincides with second longitudinal central axis 422 and an annular gap 430 is formed between first cylindrical body 410 and second cylindrical body 420. For example, device 400, first cylindrical body 410, second cylindrical body 420 and annular gap 430 may be similar to device 100, first cylindrical body 110 and second cylindrical body 120, respectively, described above with respect to Figs. 1A, 1B, 1C, 1D, 1E, 1F, 1G and 1H.

First cylindrical body 410 may be rotatably supported and adapted to rotate about first longitudinal central axis 412 and with respect to second cylindrical body 420 (e.g., as indicated by arrow 412a in Figs. 4A and 4B). Annular gap 430 between first cylindrical body 410 and second cylindrical body 420 may be adapted to receive a viscous fluid (e.g., a melt of polymeric materials with contaminants). In some embodiments, first cylindrical body 410 may be disposed within second cylindrical body 420 (e.g., as shown in Figs. 4A and 4B) or second cylindrical body 420 may be disposed within first cylindrical body 410 (e.g., as shown in Figs. 4C and 4D).

First cylindrical body 410 may include a plurality of apertures 416 disposed along at least a portion of a circumference of first cylindrical body 410. Apertures 416 may be disposed along at least one longitudinal filtering section 413 of first annual body 410. For example, apertures 416 may be similar to apertures 116 and/or slots 216 described above with respect to Figs. 1A, 1B, 1C, 1D, 1E, 1F, 1G and 1H and Figs. 2A, 2B, 2C and 2D, respectively.

According to some embodiments, second cylindrical body 420 may include one or more longitudinal fins 440. Longitudinal fin(s) 440 may protrude from second cylindrical body 420 into annular gap 430 and towards (or substantially towards) first cylindrical body 410. Longitudinal fin(s) 440 may be aligned with second longitudinal central axis 422 of second cylindrical body 420 and/or may extend along at least a portion of a length of second cylindrical body 420 in a longitudinal direction thereof.

Longitudinal fin(s) 440 may protrude from second cylindrical body 420 to provide a space of increased shear rate 448 between tips of longitudinal fin(s) 440 and first cylindrical body 410. In this manner, the shear rate of the viscous fluid in space of increased shear rate 448 between tips of longitudinal fin(s) 440 and first cylindrical body 410 may be increased (e.g., as compared to embodiments without longitudinal fin(s) 410), which may further contribute to the self-cleaning/sweeping of first cylindrical body 410.

In general, the number of longitudinal fin(s) 440 and space of increased shear rate 448 may be determined to provide increased shear rates between tips of longitudinal fin(s) 440 and first cylindrical body 410 without reducing (or with a minimal reduction of) the open cross section for axial flow of the viscous fluid through device 400 (e.g., as compared to embodiments without longitudinal fin(s) 440). The increased shear rates in space of increased shear rate 448 may contribute to the self-cleaning effect of device 400.

In some embodiments, device 400 may include a housing 402. Hosing 402 may be adapted to accommodate first cylindrical body 410 and second cylindrical body 420.

In some embodiments, device 400 may include at least one inlet opening 404 through which contaminated viscous fluid 90 may be pumped into annular gap 430. In some embodiments, device 400 may include a contaminated viscous fluid removing means 406 (e.g., comprising one or more tubes, one or more pumps, etc.) for controllably removing contaminated viscous fluid 90 from annular gap 430. In some embodiments, device 400 may include a clean viscous fluid removing means 408 (e.g., comprising one or more tubes, one or more pumps, etc.) for controllably removing clean viscous fluid 92 from device 400.

In some embodiments, device 400 may include a rotating assembly 450 for rotating first cylindrical body 410. In some embodiments, device 400 may include a controller 460 for controlling at least one of: rotation of first cylindrical body 410 by rotating assembly 450, removal of contaminated viscous fluid by contaminated viscous fluid removing means 406 and removing clean viscous fluid 92 by clean viscous fluid removing means 408.

The description below made with respect to Figs. 4C and 4D provides an example of dimensions of device 400', of operational conditions of device 400' and of contaminated viscous fluid 90. It would be appreciated by those skilled in the art that this example merely describes certain embodiment that is within the ambit of the invention, yet other operation conditions, with different viscous materials and various ranges of dimensions of the device 400' may be designed and operated within the scope of the present invention.

For example, second cylindrical body 420 may have a diameter of 220 mm. Second cylindrical body 420 may be disposed within rotatable first cylindrical body, wherein a diameter of first cylindrical body 410 may, for example, be 250 mm. Filtering section 413 on first cylindrical body 410 may, for example, have a length of 400 mm.

Longitudinal fin(s) 440 may protrude from second cylindrical body 420 such that space of increased shear rate 448 between tips of longitudinal fin(s) 440 and first cylindrical body 410 may, for example, be 2 mm.

Apertures 416 on first cylindrical body 410 may, for example, be slots (e.g., like slots 216 described above with respect to Figs. 2A, 2B, 2C and 2D) that may have dimensions of 60x400 µm and that may be aligned along their long dimension with first longitudinal central axis 412 of first cylindrical body 410. The number of apertures/slots 416 on first cylindrical body 410 may, for example, be about 1,240,000. Apertures/slots 416 may be radially tapered (e.g., as shown in Fig. 4C). A width of openings 416a of apertures/slots 416 on outer surface 410a of first cylindrical body 410 may, for example, 120 µm and a width of openings 416b on inner surface 410b of first cylindrical body 410 may, for example, 60 µm.

Contaminated viscous fluid 90 may, for example, be a mixture of Polyethylene grades from post-consumer recycling containing, for example, 2% contamination of solid particles having dimensions below, for example, 500 mµ. Contaminated viscous fluid 90 may, for example, have a viscosity of 200 Pa·sec at 170°C and at a shear rate of 150 1/s. In some embodiments the viscosity of the contaminated fluid will be higher or equal to 40 Pa•sec.

Contaminated viscous fluid 90 may be pumped into annular gap 430 at a temperature of, for example, 170°C. First cylindrical body 410 may be rotated at, for example, 50-RPM. Contaminated viscous fluid 90 may be controllably pumped into annular gap 430 at a flowrate of, for example, 1200 kg/hr, which may provide a pressure within annular gap of, for example, 80-120 Bar.

The temperature of contaminated viscous fluid 90 may be elevated by, for example 6-14°C when passing through device 400', for example due to energy dissipated in shearing the viscous material.

It is noted that other dimensions and operational conditions of device 400' and other contaminated viscous fluids 90 may be used as well.

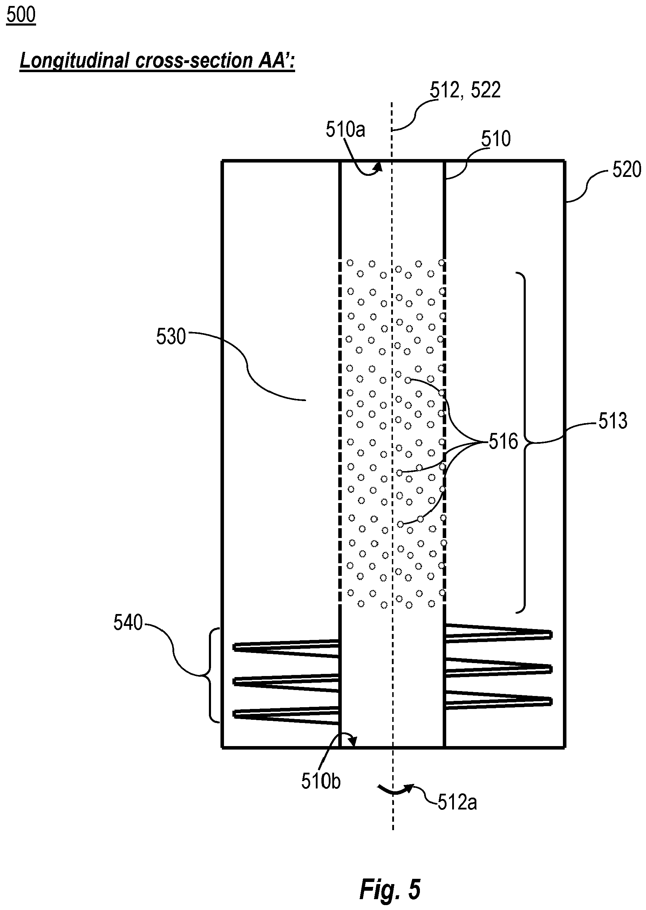

Reference is now made to **Fig. 5**, which is a schematic illustration of a device 500 for continuous filtration of contaminants from a viscous fluid and including one or more sections of helically flighted fins 540, according to some embodiments of the invention.

Fig. 5 shows a longitudinal cross-section AA' of device 500 (e.g., similar to longitudinal cross-section AA' defined in Fig. 1A).

According to some embodiments, device 500 may include a first cylindrical body 510 having a first longitudinal central axis 512 and a second cylindrical body 520 having a second longitudinal central axis 522. First cylindrical body 510 and second cylindrical body 520 may overlap such that first longitudinal central axis coincides with second longitudinal central axis 522 and an annular gap 530 is formed between first cylindrical body 510 and second cylindrical body 520. For example, device 500, first cylindrical body 510, second cylindrical body 520 and annular gap 530 may be similar to device 100, first cylindrical body 110 and second cylindrical body 120, respectively, described above with respect to Figs. 1A, 1B, 1C, 1D, 1E, 1F, 1G and 1H.

First cylindrical body 510 may be rotatably supported and adapted to rotate about first longitudinal central axis 512 and with respect to second cylindrical body 520 (e.g., as indicated by arrow 512a in Fig. 5). Annular gap 530 between first cylindrical body 510 and second cylindrical body 520 may be adapted to receive a viscous fluid (e.g., a melt of polymeric materials with contaminants).

First cylindrical body 510 may include a plurality of apertures 516 disposed along at least a portion of a circumference of first cylindrical body 510. Apertures 516 may be disposed along at least one longitudinal filtering section 513 of first annual body 510. For example, apertures 516 may be similar to apertures 116 and/or to slots 216 described above with respect to Figs. 1A, 1B, 1C, 1D, 1E, 1F, 1G and 1H and Figs. 2A, 2B and 2C, respectively.

According to some embodiments, first annual body 510 may include at least one section of helically flighted fins 540. Helically flighted fins 540 may be disposed along first longitudinal central axis 512 of first cylindrical body 510 and may protrude into annular gap 530. Helically flighted fins(s) 540 may be disposed downstream longitudinal filtering section(s) 513 (e.g., as shown in Fig. 5).

Helically flighted fin(s) 540 may generate additional suction forces (e.g., forward pumping) for the viscous fluid being introduced into annular gap 530. In this manner, flighted fin(s) 540 may set lower range of work pressures within device 500 (e.g., as compared to embodiments without flighted fin(s) 540) and/or to assist adapting device 500 to existing extruders that are typically adapted to operate under certain pressure conditions.

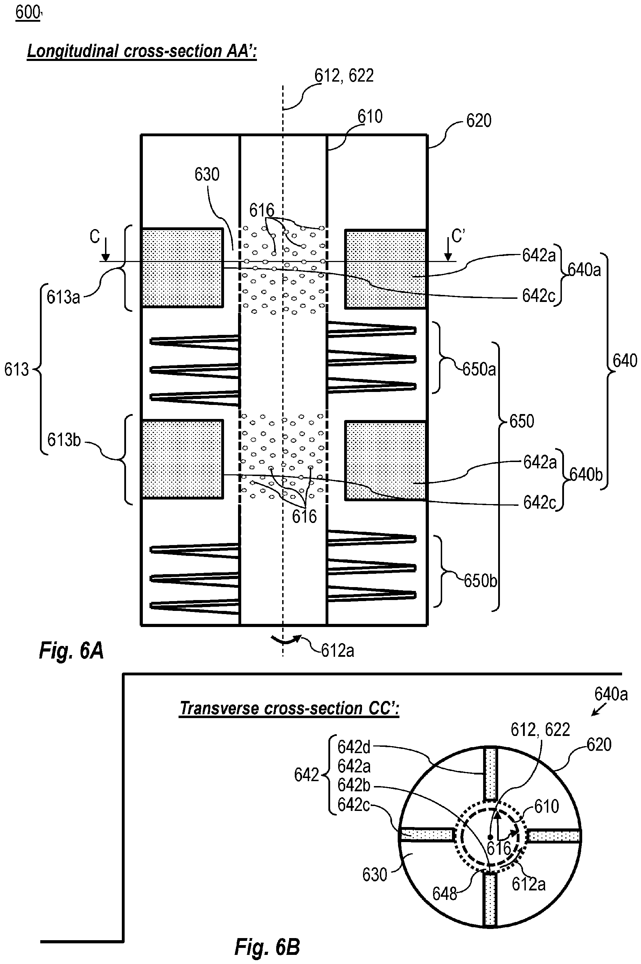

Reference is now made to **Figs. 6A** and **6B**, which are schematic illustrations of a device 600 for continuous filtration of contaminants from a viscous fluid and including one or more sets 640 of longitudinal fins 642 and one or more sections of helically flighted fins 650, according to some embodiments of the invention.

Fig. 6A and Fig. 6B show a longitudinal cross-section AA' (e.g., similar to longitudinal cross-section AA' defined in Fig. 1A) and a transverse cross-section CC' (defined in Fig. 6A) of device 600, respectively.

According to some embodiments, device 600 may include a first cylindrical body 610 having a first longitudinal central axis 612 and a second cylindrical body 620 having a second longitudinal central axis 622. First cylindrical body 610 and second cylindrical body 620 may overlap such that first longitudinal central axis coincides with second longitudinal central axis 622 and an annular gap 630 is formed between first cylindrical body 610 and second cylindrical body 620. For example, device 600, first cylindrical body 610, second cylindrical body 620 and annular gap 630 may be similar to device 100, first cylindrical body 110 and second cylindrical body 120, respectively, described above with respect to Figs. 1A, 1B, 1C, 1D, 1E, 1F, 1G and 1H.

First cylindrical body 610 may be rotatably supported and adapted to rotate about first longitudinal central axis 612 and with respect to second cylindrical body 620 (e.g., as indicated by arrow 612a in Fig. 5). Annular gap 630 between first cylindrical body 610 and second cylindrical body 620 may be adapted to receive a viscous fluid (e.g., a melt of polymeric materials with contaminants).

According to some embodiments, first cylindrical body 610 may include one or more filtering sections 613 along its first longitudinal central axis 612. For example, Fig. 6A shows device 600 with two filtering sections 613 - a first filtering section 613a and a second filtering section 613b. Each of filtering section(s) 613 may include a plurality of apertures 616 disposed on a circumference of first cylindrical body 610 in the respective filtering section. For example, apertures 616 may be similar to apertures 116 and/or slots 216 described above with respect to Figs. 1A, 1B, 1C, 1D, 1E, 1F, 1G and 1H and Figs. 2A, 2B and 2C, respectively.

According to some embodiments, second cylindrical body 620 may include one or more sets 640 of longitudinal fins 642. Each of sets 640 may include one or more longitudinal fins 642. Each of longitudinal fins 642 may be similar to, for example, longitudinal fins 440 described above with respect to Figs. 4A and 4B.

In some embodiments, each of sets 640 may be disposed on second annual body 620 at a position that corresponds to a position of one of filtering section(s) 613 on first cylindrical body 610. Longitudinal fin(s) 642 of each of sets 640 may protrude from second cylindrical body 620 into annular gap 630 and towards (or substantially towards) respective filtering section 613 on first cylindrical body 610. Longitudinal fin(s) 642 of each set 640 may be aligned with second longitudinal central axis 622 of second cylindrical body 620 and/or may extend along at least a portion of a length of respective filtering section 613.

For example, Figs. 6A shows device 600 in which second cylindrical body 620 includes two sets 640 of longitudinal fins 642 - a first set 640a and a second set 640b. Yet in this example, first set 640a is disposed at a position along second cylindrical body 620 that corresponds to a position of first filtering section 613a on first cylindrical body 610 and second set 640b is disposed at a position along second cylindrical body 620 that corresponds to a position of second filtering section 613b on first cylindrical body 610. Yet in this example, each of first set 640a and second set 640b includes four longitudinal fins 642 - a first longitudinal fin 642a, a second longitudinal fin 642b, a third longitudinal fin 642c and a fourth longitudinal fin 642d (e.g., as shown in Fig. 6B).

In some embodiments, longitudinal fin(s) 642 of each set 640 may protrude from second cylindrical body 620 to provide a space of increased shear rate 648 between tips of longitudinal fin(s) 642 and first cylindrical body 610. In this manner, shear rates of the viscous fluid in space of increased shear rate 648 between tips of longitudinal fin(s) 642 and filtering sections 613 on first cylindrical body 610 may be increased (e.g., as compared to embodiments without longitudinal fin(s) 642), which may further contribute to the self-cleaning of device 600 (e.g., as described above with respect to Figs. 4A and 4B).

According to some embodiments, first annual body 610 may include at least one section of helically flighted fins 650. Helically flighted fins 650 may be disposed along first longitudinal central axis 612 of first cylindrical body 610 and may protrude into annular gap 630. Helically flighted fins 650 may be similar to, for example, helically flighted fins 540 described above with respect to Fig. 5.

In various embodiments, first cylindrical body 610 may include one or more sections of helically flighted fins 650 downstream at least one of filtering section(s) 613 on first cylindrical body 610. For example, Fig. 6A shows device 600 that includes a first section of helically flighted fins 650a, a second section of helically flighted fins 650b and a third section of helically flighted fins 650c. Yet in this example, first section of helically flighted fins 650a is disposed downstream to first filtering section 613a and second section of helically flighted fins 650b is disposed downstream second filtering section 613b.

Helically flighted fin(s) 650 may generate additional suction forces (e.g., forward pumping) for the viscous fluid being introduced into annular gap 630. In this manner, flighted fin(s) 650 may set lower range of work pressures within device 600 (e.g., as compared to embodiments without flighted fin(s) 650) and/or to assist adapting device 600 to existing extruders that are typically adapted to operate under certain pressure conditions.

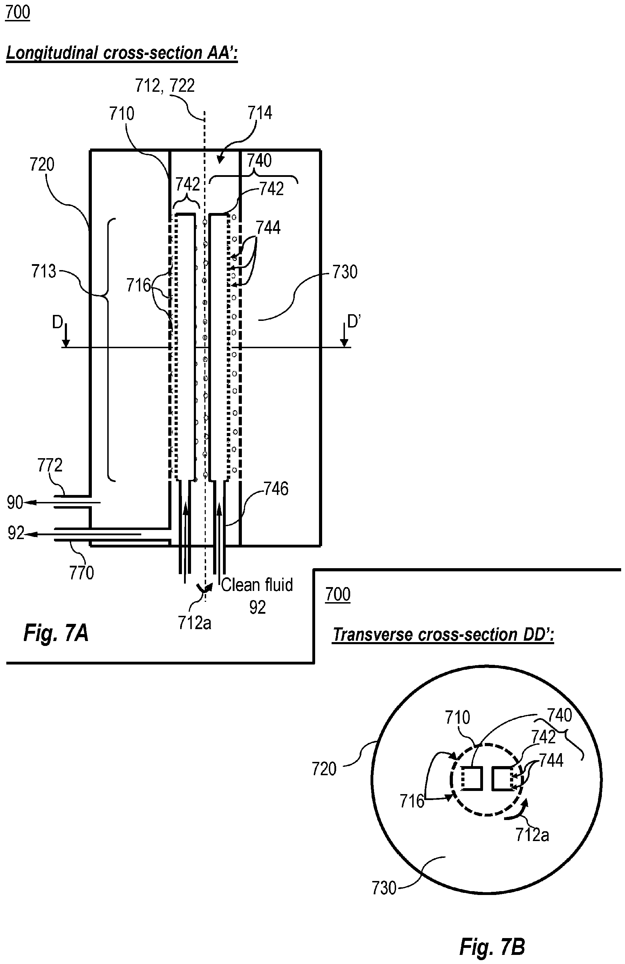

Reference is now made to Figs. 7A and **7B**, which are schematic illustrations of a device 700 for continuous filtration of contaminants from a viscous fluid and including a washing assembly 740, according to some embodiments of the invention.

Fig. 7A shows a longitudinal cross-section AA' in device 700 (e.g., similar to longitudinal cross-section AA' defined in Fig. 1A). Fig. 7B shows a transverse cross-section DD' (defined in Fig. 7A) of device 700, respectively.

According to some embodiments, device 700 may include a first cylindrical body 710 having a first longitudinal central axis 712 and a second cylindrical body 720 having a second longitudinal central axis 722. First cylindrical body 710 and second cylindrical body 720 may overlap such that first longitudinal central axis coincides with second longitudinal central axis 722 and an annular gap 730 is formed between first cylindrical body 710 and second cylindrical body 720. For example, device 700, first cylindrical body 710, second cylindrical body 720 and annular gap 730 may be similar to device 100, first cylindrical body 110 and second cylindrical body 120, respectively, described above with respect to Figs. 1A, 1B, 1C, 1D, 1E, 1F, 1G and 1H.

First cylindrical body 710 may be rotatably supported and adapted to rotate about first longitudinal central axis 712 and with respect to second cylindrical body 720 (e.g., as indicated by arrow 712a in Figs. 7A and 7B). Annular gap 730 between first cylindrical body 710 and second cylindrical body 720 may be adapted to receive a viscous fluid (e.g., a melt of polymeric materials with contaminants).

First cylindrical body 710 may include a plurality of apertures 716 disposed along at least a portion of a circumference of first cylindrical body 710. Apertures 713 may be disposed along at least one longitudinal filtering section 713 of first annual body 710. For example, apertures 716 may be similar to apertures 116 and/or to slots 216 described above with respect to Figs. 1A, 1B, 1C, 1D, 1E, 1F, 1G and 1H and Figs. 2A, 2B and 2C, respectively.

According to some embodiments, device 700 may include a washing assembly 740. Washing assembly 740 may include at least one washing injector 742. Washing injector(s) 742 may include a plurality of injector holes/slots 744.

In some embodiments, when first cylindrical body 710 is disposed within second cylindrical body 720, washing injector(s) 742 may be disposed within an interior 714 of first cylindrical body 710 such that injector holes/slots 744 face first cylindrical body 710 (e.g., as shown in Figs. 7A and 7B). In some other embodiments, when the second cylindrical body 720 is disposed within the first cylindrical body 710, washing injector(s) 742 may be disposed external and adjacent (or substantially adjacent) to first cylindrical body 710 and within a housing of the device (e.g., such as housing 140 described above with respect to Figs. 1F and 1G). Washing injector(s) 742 may be dimensioned to extend along at least a portion of longitudinal filtering section 713 with apertures 716 and/or along at least a portion of the circumference thereof.

Washing assembly 740 may include at least one washing tube 746 in fluid communication with at least one washing injector 742 and adapted to deliver the clean viscous fluid to washing injector(s) 742. In some embodiments, the clean viscous fluid may be the same viscous fluid cleaned by first annual body 710. The clean viscous fluid may be injected through injector holes/slots 744 in washing injector(s) 742 towards rotating first cylindrical body 710, thus covering a portion of apertures 716 at each time point and generating a backflow (e.g., in a radial direction of the clean viscous fluid in the respective portion of apertures. The backflow of the clean viscous fluid generated in the portion of apertures thereof may push the contaminants in the viscous fluid contained within annular gap 730 away from first annual body 710, thus enhancing the self-cleaning/sweeping effect of device 700.

In some embodiments washing of the perforated surface may be achieved without using effecting backflow in apertures. The pressure of the fluid on the 'clean' side of the perforated surface may be raised for a defined short term, for example so that the pressures on both sides of the perforated surface are substantially equal. For example, clean viscous fluid may be injected through injector holes/slots 744 in washing injector(s) 742 until the pressures on both sides of the perforated surface are substantially equal and then the flow of clean viscous fluid may be controlled to keep this situation for a desired period of time. During this time, the radial flow of viscous fluid through the perforated surface substantially completely stops, while the tangential flow over the perforated surface on the side of the contaminated fluid continuous. The shear forces developing adjacent the perforated surface may then hold contaminants that were stuck to the perforated surface and drift them with the flow, thereby washing the perforated surface, without using backflow. In some embodiments, the pressure drop between the high-pressure side of the perforated surface (the side of the contaminated fluid) and the low-pressure side (the side of the clean fluid) may be lowered in order to reduce the pressure drop, thereby extending the effect of the self-cleaning of the perforated surface. In some embodiments the rotational speed of second cylindrical body may be increased for a short period of time at a given rotational speed acceleration and then be deaccelerated to the nominal rotational speed at a lower rate, in order to momentary increase the sweeping effect of clogged contaminants off perforations due to the accelerated rotational speed.

In some embodiments, first cylindrical body 710 may include a clean viscous fluid outlet 770 for controllably remove the clean viscous fluid from the interior of first cylindrical body 710. For example, clean viscous fluid outlet 770 may be similar to clean viscous fluid removing means 170 described above with respect to Fig. 1F.

In some embodiments, second cylindrical body 720 may include a non-filtrated viscous fluid outlet 772 for controllably removing of the non-filtrated viscous fluid with contaminants accumulated within annular gap 730. For example, non-filtrated viscous fluid outlet 772 may be similar to non-filtrated viscous fluid removing means 172 described above with respect to Fig. 1F.

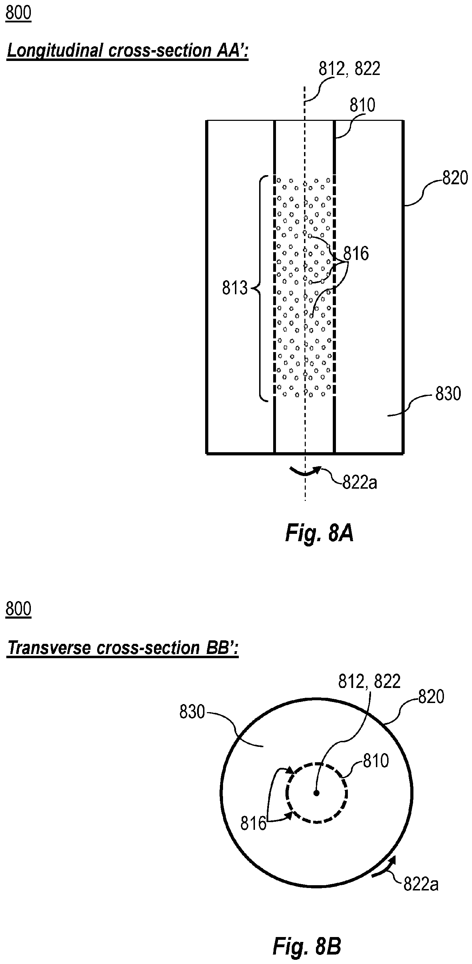

Reference is now made to Figs. 8A and **8B****,** which are schematic illustrations of a device 800 for continuous filtration of contaminants from a viscous fluid including a stationary filtering element, according to some embodiments of the invention.

Fig. 8A and Fig. 8B show a longitudinal cross-section AA' and a transverse cross-section BB' of device 800, respectively (e.g., similar to longitudinal cross-section AA' and transverse cross-section BB' defined in Fig. 1A).

According to some embodiments, device 800 may include a first cylindrical body 810 having a first longitudinal central axis 812 and a second cylindrical body 820 having a second longitudinal central axis 822. First cylindrical body 810 and second cylindrical body 820 may overlap such that first longitudinal central axis 812 coincides with second longitudinal central axis 822 and an annular gap 830 is formed between first cylindrical body 810 and second cylindrical body 820. For example, device 800, first cylindrical body 810, second cylindrical body 820 and annular gap 830 may be similar to device 100, first cylindrical body 110 and second cylindrical body 120, respectively, described above with respect to Figs. 1A, 1B, 1C, 1D, 1E, 1F, 1Gand 1H.

First cylindrical body 810 may include a plurality of apertures 816 disposed along at least a portion of a circumference of first cylindrical body 810. Apertures 816 may be disposed along at least one longitudinal filtering section 813 of first annual body 810. For example, apertures 816 may be similar to apertures 116 and/or slots 216 described above with respect to Figs. 1A, 1B, 1C, 1D, 1E, 1F, 1G and 1H and Figs. 2A, 2B, 2C and 2D, respectively.

Second cylindrical body 820 may be rotatably supported and adapted to rotate about second longitudinal central axis 822 and with respect to first cylindrical body 810 (e.g., as indicated by arrow 822a in Figs. 8A and 8B). Annular gap 830 between first cylindrical body 810 and second cylindrical body 820 may be adapted to receive a viscous fluid (e.g., a melt of polymeric materials with contaminants).

Second cylindrical body 820 may be continuously rotated about its second longitudinal central axis 822, thereby generating a tangential drag flow of the viscous fluid within annular gap 830 in a tangential direction thereof. A tangential velocity gradient may be thus generated between the rotating second cylindrical body 820 and the stationary first cylindrical body 810. Contaminant particles in layers away from the surface of the stationary first cylindrical body 810 may drag at some tangential velocities while the velocity of the stationary first cylindrical body 810 is zero, thus generating a self-sweeping tangential relative motion about the surface of stationary first cylindrical body 810 where the contaminant particles move tangentially around (e.g., in the tangential direction) and longitudinally down towards exit (e.g., in a longitudinal direction) as well as a motion towards the surface of first cylindrical body 810 (e.g., in a radial direction), for example as described above with respect to Figs. 1F and 1G. Contaminant particles of a larger size than apertures 816 on the surface of first cylindrical body 810 may continue their rotational movement even upon touching the surface of stationary first cylindrical body 810 as long as the rotational speed of second cylindrical body 820 and shear rates near first cylindrical body 810 are maintained.

The rotational speed of second cylindrical body 820 and consequent tangential drag flow within annular gap 830 and/or self-sweeping tangential relative motion adjacent to first cylindrical body 810 (e.g., similar to tangential drag flow 136a and self-sweeping tangential relative motion 136b, respectively, as described above with respect to Figs. 1F, 1G and 1H) may be adapted to dramatically minimize the attachment of the contaminants to first cylindrical body 810 and dramatically minimize blocking of apertures 816 by the contaminants (e.g., at least due to the self-sweeping tangential relative motion), thus generating a self-cleaning/sweeping effect.

The self-cleaning/sweeping effect may be generated due to a shear rate of the viscous fluid near the surface of first cylindrical body 810, wherein the shear rate may be dictated, in some embodiments, at least by the rotational speed of second cylindrical body 820 and dimensions of annular gap 830.

In general, the rotational speed of second cylindrical body 820 may be controlled to ensure that a tangential velocity of the viscous fluid near the surface of second cylindrical body 810 (e.g., due to the tangential drag flow within annular gap 830) is significantly higher than an average radial velocity of the viscous fluid due to the radial flow within annular gap 830 (e.g., similar to radial flow 134a described above with respect to Figs. 1F, 1G and 1H).

In various embodiments, first cylindrical body 810 may be disposed within second cylindrical body 820 (e.g., as shown in Figs. 8A and 8B) or second cylindrical body 820 may be disposed within first annual body 810 (e.g., as described above with respect to Fig. 1C).

According to some embodiments, device 800 may include a rotating assembly including at least a rotational motor. The rotational motor may be coupled to second cylindrical body 820 and adapted to rotate second cylindrical body 820 at a controlled rotational speed. Device 800 may further include a controller in communication with the rotating assembly. The controller may be configured to control the rotation of second cylindrical body 820 by the rotating assembly according to the controlled rotational speed. For example, the rotational assembly and the controller may be similar to rotational assembly 150 and controller 160, respectively, as described above with respect to Fig. 1F.

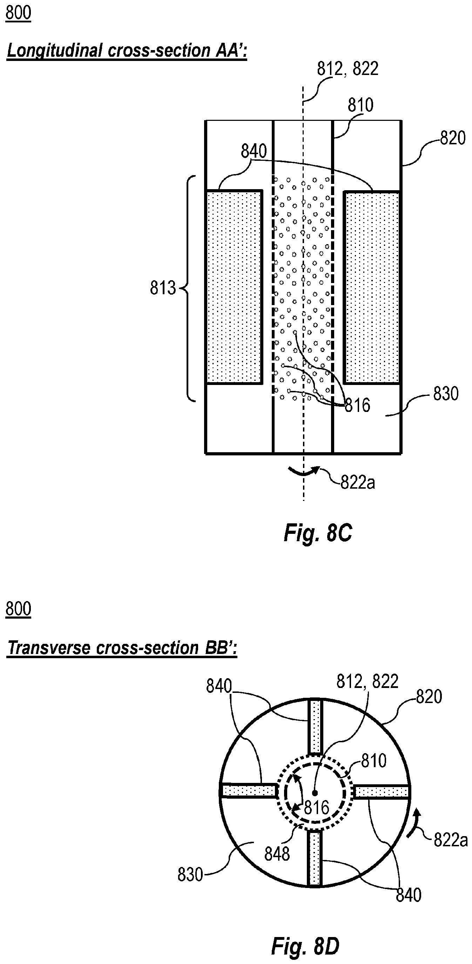

Reference is now made to **Figs. 8C** and **8D****,** which are schematic illustrations of a device 800 for continuous filtration of contaminants from a viscous fluid including a stationary filtering element and further including one or more longitudinal fins 840, according to some embodiments of the invention.

Fig. 8C and Fig. 8D show a longitudinal cross-section AA' and a transverse cross-section BB' of device 800, respectively (e.g., similar to longitudinal cross-section AA' and transverse cross-section BB' defined in Fig. 1A).

According to some embodiments, second cylindrical body 820 may include one or more longitudinal fins 840. For example, longitudinal fin(s) 840 may be similar to longitudinal fin(s) 440 described above with respect to Figs. 4A and 4B.

Longitudinal fin(s) 840 may protrude from second cylindrical body 820 into annular gap 830 and towards (or substantially towards) first cylindrical body 810. Longitudinal fin(s) 840 may be aligned with second longitudinal central axis 822 of second cylindrical body 820 and/or may extend along at least a portion of a length of second cylindrical body 820 in a longitudinal direction thereof.

Longitudinal fin(s) 840 may protrude from second cylindrical body 820 to provide a space of increased shear rate 848 between tips of longitudinal fin(s) 840 and first cylindrical body 810. In this manner, shear rates of the viscous fluid in space of increased shear rate 848 between tips of longitudinal fin(s) 840 and first cylindrical body 810 may be increased (e.g., as compared to embodiments without longitudinal fin(s) 840), which may further contribute to the self-cleaning/sweeping of first cylindrical body 810.

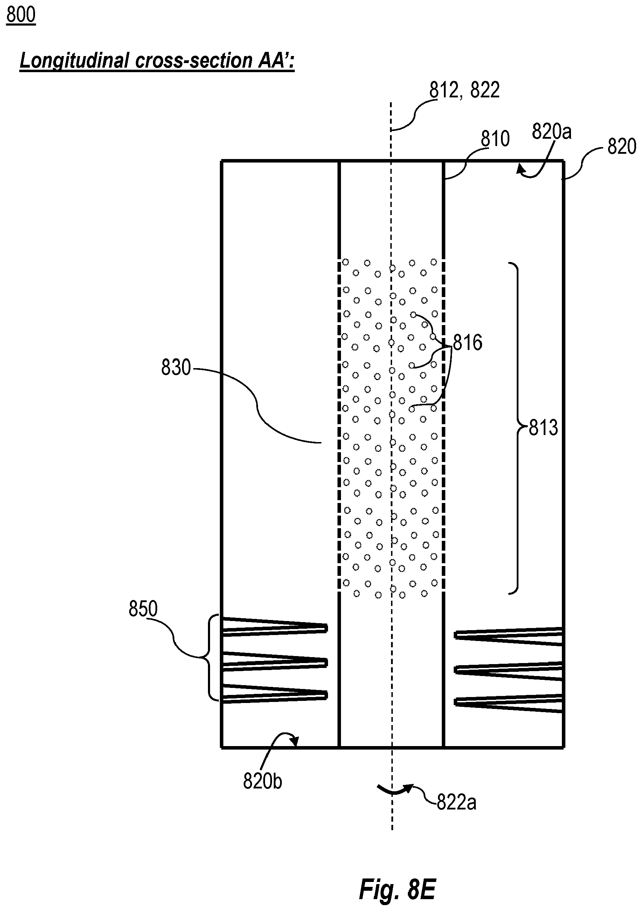

Reference is now made to **Fig. 8E****,** which is a schematic illustration of a device 800 for continuous filtration of contaminants from a viscous fluid including a stationary filtering element and further including one or more sections of helically flighted fins 850, according to some embodiments of the invention.

According to some embodiments, second annual body 820 may include at least one section of helically flighted fins 850. Helically flighted fins 850 may be disposed along second longitudinal central axis 822 of second cylindrical body 820 and may protrude into annular gap 830. Helically flighted fins 850 may be disposed downstream longitudinal filtering section 813. Helically flighted fins 850 may be similar to, for example, helically flighted fins 850 described above with respect to Fig. 5.

Flighted fin(s) 850 may generate additional suction forces for the viscous fluid being introduced into annular gap 830. In this manner, flighted fin(s) 850 may set lower range of work pressures within device 800 (e.g., as compared to embodiments without flighted fin(s) 850) and/or to assist adapting device 800 to existing extruders that are typically adapted to operate under certain pressure conditions.

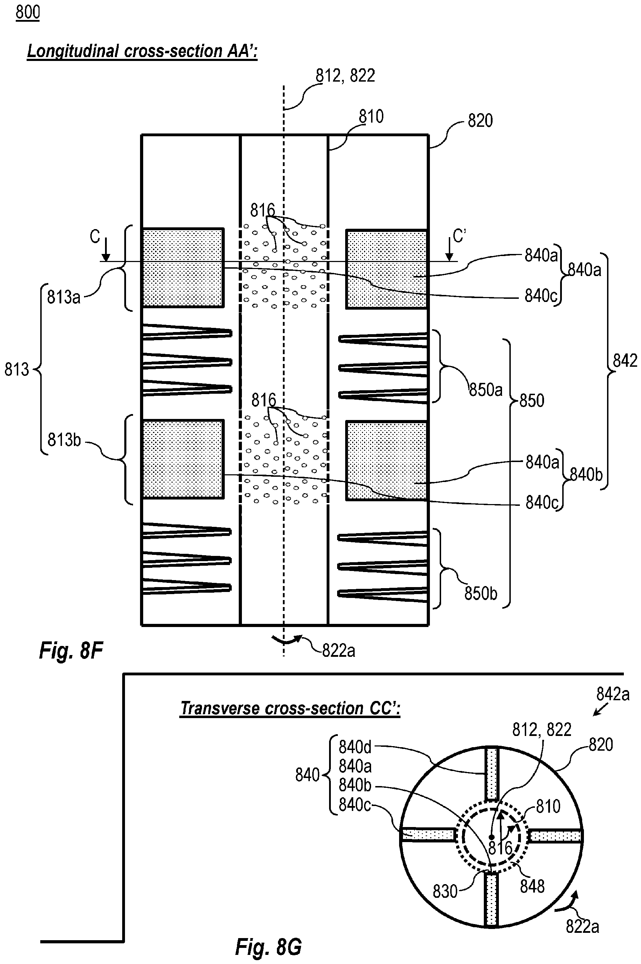

Reference is now made to **Figs. 8F** and **8G****,** which are schematic illustrations of a device 800 for continuous filtration of contaminants from a viscous fluid including a stationary filtering element and further including one or more sets 842 of longitudinal fins 840 and one or more sections of helically flighted fins 850, according to some embodiments of the invention.

Fig. 8F and Fig. 8G show a longitudinal cross-section AA' (e.g., similar to longitudinal cross-section AA' defined in Fig. 1A) and a transverse cross-section CC' (defined in Fig. 8A) of device 800, respectively.

According to some embodiments, first annual body 810 may include one or more longitudinal filtering sections 813. For example, first annual body 810 may include a first longitudinal filtering sections 813a and a second longitudinal filtering sections 813b (e.g., as shown in Fig. 8F).

According to some embodiments, second cylindrical body 820 may include one or more sets 842 of longitudinal fins 840. In some embodiments, each of sets 840 may be disposed on second annual body 820 at a position that corresponds to a position of one of filtering section(s) 813 on first cylindrical body 810. Longitudinal fin(s) 840 of each of sets 842 may protrude from second cylindrical body 820 into annular gap 830 and towards (or substantially towards) respective filtering section 813 on first cylindrical body 810. Longitudinal fin(s) 840 of each set 842 may be aligned with second longitudinal central axis 822 of second cylindrical body 822 and/or may extend along at least a portion of a length of respective filtering section 813.

For example, Figs. 8F shows device 800 in which second cylindrical body 820 includes two sets 842 of longitudinal fins 840 - a first set 842a and a second set 842b. Yet in this example, first set 842a is disposed at a position along second cylindrical body 820 that corresponds to a position of first filtering section 813a on first cylindrical body 810 and second set 842b is disposed at a position along second cylindrical body 820 that corresponds to a position of second filtering section 813b on first cylindrical body 810. Yet in this example, each of first set 842a and second set 842b includes four longitudinal fins 840 - a first longitudinal fin 840a, a second longitudinal fin 840b, a third longitudinal fin 840c and a fourth longitudinal fin 840d (e.g., as shown in Fig. 8G).

According to some embodiments, second annual body 820 may include at least one section of helically flighted fins 850 along second longitudinal central axis 822 of second cylindrical body 820.

In various embodiments, second cylindrical body 810 may include one or more sections of helically flighted fins 850 downstream one or more of filtering sections 813 on first cylindrical body 810. For example, Fig. 8F shows device 800 that includes a first section of helically flighted fins 850a and a second section of helically flighted fins 850b. Yet in this example, first section of helically flighted fins 850a is disposed downstream first filtering section 813a and second section of helically flighted fins 850b is disposed downstream second filtering section 813b.

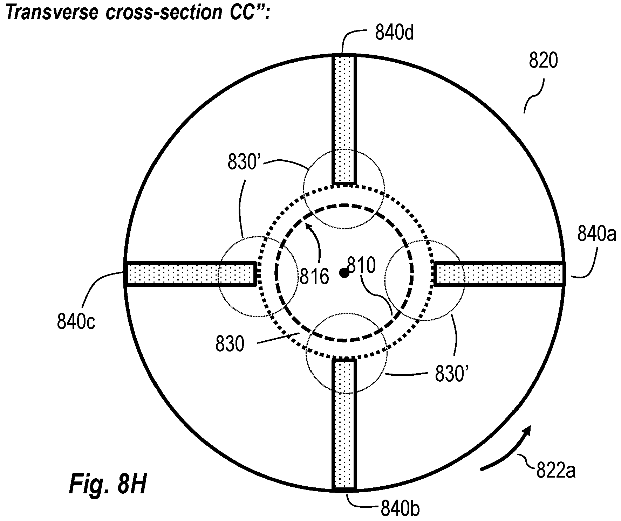

Reference is now made to **Fig. 8H****,** which is an enlarged view of the cross section of Fig. 8G, emphasizing the nature of the flow of the contaminated viscous fluid in the gap formed between fins and a perforated surface, according to embodiments of the invention. Cylindrical body 820 may be rotatably supported and adapted to rotate about second longitudinal a central axis and with respect to first cylindrical body 810 (e.g., as indicated by arrow 822a in Figs. 8A and 8B). Annular gap 830 between first cylindrical body 810 and second cylindrical body 820 may be adapted to receive a viscous fluid (e.g., a melt of polymeric materials with contaminants). Second cylindrical body 820 may be continuously rotated about its second longitudinal central axis, thereby generating a tangential drag flow of the viscous fluid within annular gap 830 specifically in the high shear zone in a tangential direction thereof, similar to the way it is described with respect to Figs. 8A-8G. A tangential velocity gradient may be thus generated between the rotating tips of the fins of second cylindrical body 820 and the stationary first cylindrical body 810. According to some embodiments, second cylindrical body 820 may include one or more fins 840 extending from second cylindrical body 820 towards first cylindrical body 810 so that their tips adjacent perforated surface of first cylindrical body 810 define annular gap 830 as second cylindrical body 820 rotates with respect to first cylindrical body 810. Operational and structural parameters, such as the viscosity of the molten contaminated fluid, the relative rotational speed of second cylindrical body 820 with respect to first cylindrical body 810, and dimensions of gap 830 may be controlled and or set to ensure conditions of flow of contaminated fluid in gap 830 is maintained substantially laminar. The tangential, radial and longitudinal components of the flow of contaminated viscous fluid within device 800, and specifically at the high shear zones defined by tips of fins 840 (depicted by dotted circles 830'), are substantially same as described by radial flow 134a, tangential flow 136a and longitudinal flow 132a of Figs. 1G and 1H.

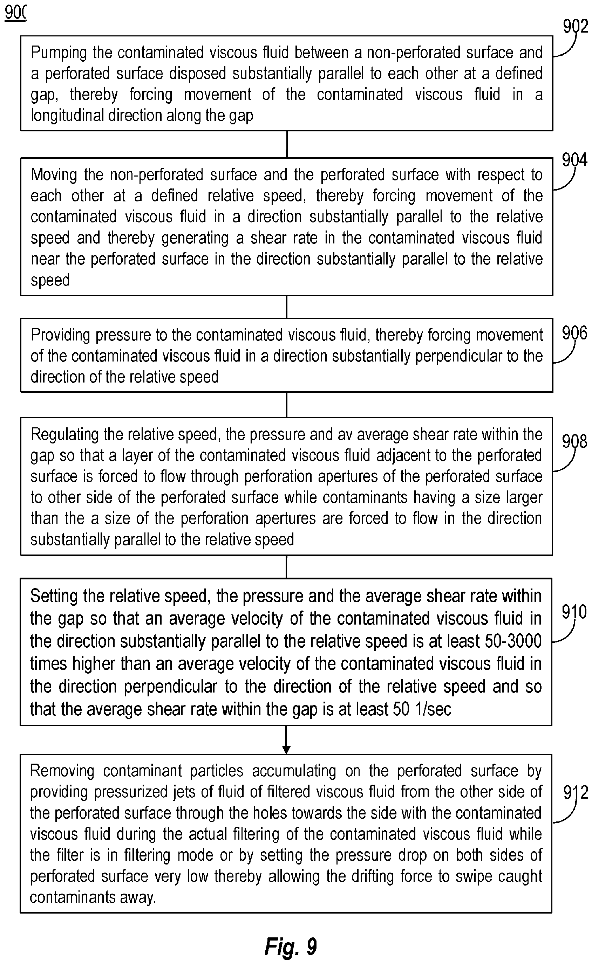

Reference is now made to **Fig. 9****,** which is a schematic illustration of a method 900 of continuous filtration of contaminants from a viscous fluid, according to some embodiments of the invention. It will be apparent to those of ordinary skill in the art that the preferred operational conditions of embodiments of the present invention are those maintaining laminar (or substantially laminar) flow of the molten contaminated fluid in the gap between fins and the first cylindrical body, such as gap 830 discussed above.

Method 900 may be implemented by a device for continuous filtration of contaminants from a viscous fluid, which may be configured to implement method 900. For example, method 900 may be implemented by device 100 (e.g., as described above with respect to Figs. 1A, 1C, 1D, 1E, 1F, 1G and 1H), device 200 (e.g., as described above with respect to Figs. 2A, 2B, 2C and 2D), device 300 (e.g., as described above with respect to Figs. 3A and 3B), device 400 (e.g., as described above with respect to Figs. 4A and 4B), device 500 (e.g., as described above with respect to Fig. 5), device 600 (e.g., as described above with respect to Figs. 6A and 6B), device 700 (e.g., as described above with respect to Figs. 7A and 7B) and/or device 800 (e.g., as described above with respect to Figs. 8A, 8B, 8C, 8D, 8E, 8F and 8G). It is noted that method 900 is not limited to the flowcharts illustrated in Fig. 9 and to the corresponding description. For example, in various embodiments, method 900 needs not move through each illustrated box or stage, or in exactly the same order as illustrated and described.

According to some embodiments, method 900 may include pumping the contaminated viscous fluid between a non-perforated surface and a perforated surface disposed substantially parallel to each other at a defined gap, thereby forcing movement of the contaminated viscous fluid in a longitudinal direction along the gap (stage 902).

For example, as described above with respect to Figs. 1A-1I, Figs. 2A-2D, Figs. 3A-3B, Figs. 4A-4B, Fig. 5, Figs. 6A-6B, Figs. 7A-7B and Figs. 8A-8G, the perforated surface may be shaped as a first cylindrical body having a first central longitudinal axis and the non-perforated surface may be shaped as a second cylindrical body having a second central longitudinal axis. Yet in this example, the second central longitudinal axis of the second cylindrical body may coincide with the first central longitudinal axis of the first cylindrical body to provide an annular gap therebetween. Yet in this example, the relative speed may be directed tangentially to surfaces and perpendicularly to the second central longitudinal axis of the second cylindrical body and the first central longitudinal axis of the first cylindrical body.

According to some embodiments, method 900 may include moving the non-perforated surface and the perforated surface with respect to each other at a defined relative speed, thereby forcing movement of the contaminated viscous fluid in a direction substantially parallel to the relative speed thereby generating a shear rate in the contaminated viscous fluid near the perforated surface in the direction substantially parallel to the relative speed (stage 904).

For example, the first cylindrical body may be rotated with respect to the second cylindrical body or the second cylindrical body (e.g., as described above with respect to Figs. 1A-1I, Figs. 2A-2D, Figs. 3A-3B, Figs. 4A-4B, Fig. 5, Figs. 6A-6B, Figs. 7A-7B) may be rotated with respect to the first cylindrical body (e.g., as described above with respect to Figs. 8A-8G).

According to some embodiments, method 900 may include providing pressure to the contaminated viscous fluid, thereby forcing movement of the contaminated viscous fluid in a direction substantially perpendicular to the direction of the relative speed (stage 906). For example, as described above with respect to Figs. 1F-1H.

According to some embodiments, method 900 may include regulating the relative speed, the pressure and an average shear rate within the gap so that a layer of the contaminated viscous fluid adjacent to the perforated surface is forced to flow through perforation apertures of the perforated surface to other side of the perforated surface while contaminants having a size larger than the a size of the perforation apertures are forced to flow in the direction substantially parallel to the relative speed (stage 908). For example, as described above with respect to Figs. 1F-1H. The perforation apertures may, for example, be elongated slots 216 as described above with respect to Figs. 2A-2D.

According to some embodiments, method 900 may include setting the relative speed, the pressure and an average shear rate within the gap so that an average velocity of the contaminated viscous fluid in the direction substantially parallel to the relative speed is at least 50 (e.g., 100-3000) times higher than an average velocity of the contaminated viscous fluid towards perforated surface (i.e. in a radial direction) and so that the average shear rate within the gap is at least 50 1/sec (e.g., 100-500 1/sec) (stage 910). For example, as described above with respect to Figs. 1F-1H.

According to some embodiments, method 900 may include removing contaminant particles accumulating on the perforated surface by providing pressurized jets of fluid of filtered viscous fluid from the other side of the perforated surface through the holes towards the side with the contaminated viscous fluid during the actual filtering of the contaminated viscous fluid while the filter is in filtering mode or by setting the pressure drop on both sides of perforated surface very low thereby allowing the drifting force to sweep caught contaminants away (stage 912). For example, as described above with respect to Figs. 7A-7B.

In the above description, an embodiment is an example or implementation of the invention. The various appearances of "one embodiment", "an embodiment", "certain embodiments" or "some embodiments" do not necessarily all refer to the same embodiments. Although various features of the invention can be described in the context of a single embodiment, the features can also be provided separately or in any suitable combination. Conversely, although the invention can be described herein in the context of separate embodiments for clarity, the invention can also be implemented in a single embodiment. Certain embodiments of the invention can include features from different embodiments disclosed above, and certain embodiments can incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

**The subject matter of the following clauses is included in the present disclosure:**
1. A method of continuous filtration of contaminants from a contaminated viscous fluid, the method comprising:
   pumping the contaminated viscous fluid between a non-perforated surface and a perforated surface disposed substantially parallel to each other at a defined first gap, thereby forcing movement of the contaminated viscous fluid in a longitudinal direction along the gap;
   moving the non-perforated surface and the perforated surface with respect to each other at a defined relative speed, thereby forcing movement of the contaminated viscous fluid in a direction substantially parallel to the relative speed thereby generating a shear rate in the contaminated viscous fluid near the perforated surface in the direction substantially parallel to the relative speed;
      wherein the perforated surface is shaped as a first cylindrical body having a first central longitudinal axis and the non-perforated surface is shaped as a second cylindrical body having a second central longitudinal axis coinciding with the first longitudinal axis and the first and second cylindrical bodies overlap and wherein the relative speed is a rotational speed and the first gap is an annular gap, and
      wherein the second cylindrical body includes one or more longitudinal fins protruding from second cylindrical body into the first gap towards the perforated surface of the first cylindrical body thereby forming a second gap between the distal tips of the fins and the perforated surface, the second gap is smaller than the first gap;
   providing pressure to the contaminated viscous fluid, thereby forcing movement of the contaminated viscous fluid in a direction substantially perpendicular to the direction of the relative speed; and
   regulating the relative speed, the pressure and an average shear rate at the second gap so that a layer of the contaminated viscous fluid adjacent to the perforated surface is forced to flow through perforation apertures of the perforated surface to other side of the perforated surface, while contaminants having a size larger than the a size of the perforation apertures are forced to flow in the direction substantially parallel to the relative speed,
   wherein the relative speed is directed tangentially to surfaces of the first and second cylinders and perpendicularly to the second central longitudinal axis of the second cylindrical body and the first central longitudinal axis of the first cylindrical body.
2. The method of clause 1, further comprising setting the relative speed, the pressure and the average shear rate within the second gap so that an average velocity of the contaminated viscous fluid in the second gap in a direction substantially parallel to the relative speed is at least 50 times higher than an average velocity of the contaminated viscous towards perforated surface and so that the average shear rate within the second gap is at least 50 1/sec.
3. The method of any one of clauses 1-2, wherein the perforation apertures are slots each having a long dimension and a short dimension and wherein the long dimensions of the slots are substantially aligned substantially perpendicular to the relative speed and parallel to the longitudinal axis of the first cylindrical body.
4. The method of clause 3, the rotational speed of the second cylindrical body may be increased for a first period of time at a given rotational speed acceleration and then be deaccelerated to a nominal rotational speed at a lower rate, thereby to momentary increase the sweeping effect of contaminants off perforated surface.
5. The method of any one of clauses 1-4, further comprising removing contaminant particles accumulating on the perforated surface by increasing the pressure of fluid of filtered viscous fluid at the other side of the perforated surface preferably to a level substantially same as the pressure of the contaminated fluid at the side with the contaminated viscous fluid during the actual filtering of the contaminated viscous fluid and while shear rate at the second gap is maintained by providing pressurized jets of fluid of filtered viscous fluid towards the side with the contaminated viscous fluid during the actual filtering of the contaminated viscous fluid.
6. The method of any one of clauses 2 or 3, wherein the perforated surface comprises a plurality of grooves, wherein a depth of the grooves is smaller than the short dimension of the slots and wherein at least one of the grooves lays across at least one of the slots.
7. The method of any one of clauses 1-6, wherein:
   the perforation apertures are disposed along at least one longitudinal filtering section along a circumference and length of the first cylindrical body.
8. The method of clause 7, wherein the first cylindrical body is disposed within the second cylindrical body.
9. The method of clause 7, wherein the second cylindrical body is disposed within the first cylindrical body.
10. The method of any one of clauses 7-9, wherein the annular gap tapers along the common rotational axis by at least one of the first cylindrical body tapers along the first longitudinal central axis and the second cylindrical body tapers along the second longitudinal central axis such that the annular gap diminishes along the first longitudinal central.
11. The method of any one of clauses 7-10, wherein one of the first cylindrical body or the second cylindrical body comprises at least one section of helically flighted fins disposed along the respective longitudinal central axis and downstream the at least one longitudinal filtering section, the helically flighted fins protrude into the annular gap.
12. A device for continuous filtration of contaminants from a viscous fluid, the device comprising:
   a first cylindrical body having a first longitudinal central axis and comprising at least one longitudinal filtering section, the at least one longitudinal filtering section comprises a plurality of apertures along a circumference thereof; and
   a second cylindrical body having a second longitudinal central axis that coincides with the first longitudinal axis of the first cylindrical body;
   wherein the first cylindrical body is adapted to overlap and to rotate with respect to the second cylindrical body such that an annular gap is formed between the first cylindrical body and the second cylindrical body, wherein the annular gap is adapted to receive the viscous fluid, and
   wherein the second cylindrical body includes one or more longitudinal fins protruding from second cylindrical body into the annular gap towards the perforated surface of the first cylindrical body thereby forming a second gap between the distal tips of the fins and the perforated surface, the second gap is smaller than the annular gap.
13. The device of clause 12, further comprising:
   a rotating assembly comprising at least a rotational motor, the rotational motor is coupled to one of the first cylindrical body and the second cylindrical body and adapted to rotate the one of the first cylindrical body and the second cylindrical body, respectively, at a controlled rotational speed; and
   a controller in communication with the rotating assembly, the controller is configured to control a relative rotation between the first cylindrical body and the second cylindrical body by the rotating assembly according to the controlled rotational speed.
14. The device of any one of clause 12 or 13, wherein the first cylindrical body is disposed within the second cylindrical body.
15. The device of any one of clauses 12-13, wherein the second cylindrical body is disposed within the first cylindrical body.
16. The device of any one of clauses 12-15, wherein the apertures are slots each having a long dimension and a short dimension and wherein the long dimensions of the slots are substantially aligned with the first longitudinal central axis of the first cylindrical body.
17. The device of clause 12-16, further comprising one or more jets disposed on the other side of the perforated surface adapted to provide pressurized jets of fluid of filtered viscous fluid from the other side of the perforated surface towards the side with the contaminated viscous fluid during actual filtering of the contaminated viscous fluid.
18. The device of any one of clauses 16 or 17, wherein the first cylindrical body further comprises a plurality of grooves along the circumference thereof, wherein a depth of the grooves is smaller than the short dimension of the slots.
19. The device of clause 18, wherein at least one of the grooves lays across at least one of the slots.
20. The device of any one of clauses 13-19, wherein the at least one longitudinal filtering section is disposed at a predetermined distance downstream a first end of the first cylindrical body.
21. The device of any one of clauses 13-20, wherein the annular gap tapers along the common rotational axis by at least one of the first cylindrical body tapers along the first longitudinal central axis and the second cylindrical body tapers along the second longitudinal central axis such that the gap diminishes along the first longitudinal central.
22. The device of any one of clauses 13-21, wherein the first cylindrical body comprises at least one section of helically flighted fins disposed along the first longitudinal central axis, the helically flighted fins protrude into the annular gap.
23. The device of any one of clauses 13-22, further comprising a washing assembly, the washing assembly comprising:
   at least one washing injector comprising a plurality of injection holes/slots; and
   a washing tube in fluid communication with the at least one washing injector and adapted to deliver a clean viscous fluid to the at least one washing injector;
   wherein the at least one washing injector is disposed and dimensioned so as to extend along at least a portion of the at least one longitudinal filtering section of the first cylindrical body and adapted to inject the clean viscous fluid towards the rotating first cylindrical body from the clean viscous fluid side of the rotating first cylindrical body through its apertures towards the other side of the rotating first cylindrical body.

## Claims

1. A method of continuous filtration of contaminants from a contaminated viscous fluid, the method comprising:
pumping the contaminated viscous fluid between a non-perforated surface and a perforated surface disposed substantially parallel to each other at a defined gap, thereby forcing movement of the contaminated viscous fluid in a longitudinal direction along the gap;
moving the non-perforated surface and the perforated surface with respect to each other at a defined relative speed, thereby forcing movement of the contaminated viscous fluid in a direction substantially parallel to the relative speed with a smooth, vortex-free laminar flow with Reynolds Number (Re) < 1, thereby generating a shear rate in the contaminated viscous fluid near the perforated surface in the direction substantially parallel to the relative speed;
wherein the perforated surface is shaped as a first cylindrical body having a first central longitudinal axis and the non-perforated surface is shaped as a second cylindrical body having a second central longitudinal axis coinciding with the first longitudinal axis and the first and second cylindrical bodies overlap and wherein the relative speed is a rotational speed and the gap is an annular gap;
providing pressure to the contaminated viscous fluid, thereby forcing movement of the contaminated viscous fluid in a direction substantially perpendicular to the direction of the relative speed; and
regulating the relative speed, the pressure and an average shear rate at the gap so that a layer of the contaminated viscous fluid adjacent to the perforated surface is forced to flow through perforation apertures of the perforated surface to other side of the perforated surface, while contaminants having a size larger than the a size of the perforation apertures are forced to flow in the direction substantially parallel to the relative speed, wherein the relative speed is directed tangentially to surfaces of the first and second cylinders and perpendicularly to the second central longitudinal axis of the second cylindrical body and the first central longitudinal axis of the first cylindrical body.

2. The method of claim 1, further comprising setting the relative speed, the pressure and the average shear rate within the gap so that an average velocity of the contaminated viscous fluid in the gap in a direction substantially parallel to the relative speed is at least 50 times higher than an average velocity of the contaminated viscous fluid towards the perforated surface and so that the average shear rate within the gap is at least 50 1/sec.

3. The method of any one of claims 1-2, wherein the perforation apertures are slots each having a long dimension and a short dimension and wherein the long dimensions of the slots are substantially aligned substantially perpendicular to the relative speed and parallel to the longitudinal axis of the first cylindrical body.

4. The method of claim 3, comprising increasing the rotational speed of the second cylindrical body for a first period of time at a given rotational speed acceleration and then decelerating to a nominal rotational speed at a lower rate, thereby momentary increasing a sweeping effect of contaminants off the perforated surface.

5. The method of any one of claims 1-4, further comprising removing contaminant particles accumulating on the perforated surface by increasing the pressure of fluid of filtered viscous fluid at the other side of the perforated surface preferably to a level substantially same as the pressure of the contaminated fluid at the side with the contaminated viscous fluid during the actual filtering of the contaminated viscous fluid and while shear rate at the gap is maintained by providing pressurized jets of fluid of filtered viscous fluid towards the side with the contaminated viscous fluid during the actual filtering of the contaminated viscous fluid.

6. The method of any one of claims 1-5, wherein: the perforation apertures are disposed along at least one longitudinal filtering section along a circumference and length of the first cylindrical body.

7. The method of any one of claims 1-6, wherein the second cylindrical body includes one or more longitudinal fins protruding from second cylindrical body into the first gap towards the perforated surface of the first cylindrical body thereby forming a second gap between the distal tips of the fins and the perforated surface, the second gap is smaller than the first gap.

8. A device for continuous filtration of contaminants from a viscous fluid, the device comprising:
a first cylindrical body having a first longitudinal central axis and comprising at least one longitudinal filtering section, the at least one longitudinal filtering section comprises perforated surface having a plurality of perforation apertures along a circumference thereof; and a second cylindrical body having a second longitudinal central axis that coincides with the first longitudinal axis of the first cylindrical body and a non-perforated surface; wherein the first cylindrical body is adapted to overlap and to rotate with respect to the second cylindrical body such that an annular gap is formed between the first cylindrical body and the second cylindrical body, wherein the annular gap is adapted to receive the viscous fluid,
wherein the device is configured to
pump the contaminated viscous fluid between the non-perforated surface and the perforated surface, thereby forcing movement of the contaminated viscous fluid in a longitudinal direction along the gap,
move the non-perforated surface and the perforated surface with respect to each other at a defined relative speed, thereby forcing movement of the contaminated viscous fluid in a direction substantially parallel to the relative speed with a smooth, vortex-free laminar flow with Reynolds Number (Re) < 1, thereby generating a shear rate in the contaminated viscous fluid near the perforated surface in the direction substantially parallel to the relative speed,
provide pressure to the contaminated viscous fluid, thereby forcing movement of the contaminated viscous fluid in a direction substantially perpendicular to the direction of the relative speed, and
regulate the relative speed, the pressure and an average shear rate at the gap so that a layer of the contaminated viscous fluid adjacent to the perforated surface is forced to flow through the perforation apertures of the perforated surface to other side of the perforated surface, while contaminants having a size larger than the a size of the perforation apertures are forced to flow in the direction substantially parallel to the relative speed, wherein the relative speed is directed tangentially to surfaces of the first and second cylinders and perpendicularly to the second central longitudinal axis of the second cylindrical body and the first central longitudinal axis of the first cylindrical body.

9. The device of claim 8, further comprising: a rotating assembly comprising at least a rotational motor, the rotational motor is coupled to one of the first cylindrical body and the second cylindrical body and adapted to rotate the one of the first cylindrical body and the second cylindrical body, respectively, at a controlled rotational speed; and a controller in communication with the rotating assembly, the controller is configured to control a relative rotation between the first cylindrical body and the second cylindrical body by the rotating assembly according to the controlled rotational speed.

10. The device of any one of claim 8 or 9, wherein the first cylindrical body is disposed within the second cylindrical body.

11. The device of any one of claims 8-9, wherein the second cylindrical body is disposed within the first cylindrical body.

12. The device of any one of claims 8-11, wherein the apertures are slots each having a long dimension and a short dimension and wherein the long dimensions of the slots are substantially aligned with the first longitudinal central axis of the first cylindrical body.

13. The device of any one of claims 9-12, wherein the annular gap tapers along the common rotational axis by at least one of the first cylindrical body tapers along the first longitudinal central axis and the second cylindrical body tapers along the second longitudinal central axis such that the gap diminishes along the first longitudinal central.

14. The device of claim 9, wherein the second cylindrical body includes one or more longitudinal fins protruding from second cylindrical body into the annular gap towards the perforated surface of the first cylindrical body thereby forming a second gap between the distal tips of the fins and the perforated surface, the second gap is smaller than the annular gap.

15. The device of any one of claims 9-14, wherein the first cylindrical body comprises at least one section of helically flighted fins disposed along the first longitudinal central axis, the helically flighted fins protrude into the annular gap.
